# EUROPEAN PATENT APPLICATION

(11) **EP 4 296 227 A1**
(43) Date of publication of application: **27.12.2023**
(21) Application number: 22756029.9
(22) Date of filing: 08.02.2022
(51) Int. Cl.: C01B 32/28

(54) **NANO CARBON MATERIAL DISPERSION COMPOSITION**

(30) Priority: 18.02.2021 JP 2021024006
(71) Applicant: Daicel Corporation, Osaka 530-0011 (JP)
(72) Inventor: SAKATA, Yumi, Tokyo 108-8230 (JP); KUME, Atsushi, Tokyo 108-8230 (JP); MATSUNO, Naoyoshi, Tokyo 108-8230 (JP)
(74) Representative: Grünecker Patent- und Rechtsanwälte PartG mbB
(86) International application number: PCT/JP2022/004918
(87) International publication number: WO 2022/176708

(57) **Abstract**

The present invention provides a dispersion composition in which a nanocarbon material having a graphene structure is dispersed at nano-scale in a dispersion medium. The present invention also provides a nanocarbon material which has a graphene structure and has excellent dispersibility in a dispersion medium. A nanocarbon material dispersion composition includes a dispersion medium and the nanocarbon material dispersed at nano-scale in the dispersion medium, the nanocarbon material including a nanodiamond particle and a graphene layer formed on the surface of the nanodiamond particle, and the nanocarbon material has: a wavenumber, which corresponds to a peak-top value in a wavenumber range of 1580 ± 50 cm⁻¹ in a Raman spectrum, from 1585 cm⁻¹ to 1630 cm⁻¹; and a peak that appears at 20 = 43 to 44° in an XRD analysis.

## Description

### Technical Field

The present disclosure relates to a nanocarbon material dispersion composition. More specifically, the present disclosure relates to a dispersion composition in which a nanocarbon material is dispersed in a dispersion medium. The present application claims priority from the Japanese Patent Application No. 2021-024006 filed in Japan on February 18, 2021, the content of which is incorporated herein by reference.

### Background Art

Nano-sized fine substances such as nanocarbon materials are known to have novel characteristics that cannot be achieved in a bulk state. For example, among nanocarbon materials, graphite (formed of stacked layers of graphene) is a substance with a two-dimensional structure that has a large specific surface area and that exhibits excellent conductivity and excellent sensitivity to small molecules. For that reason, graphite has been used in various electrode materials. However, nanocarbon materials typically have large proportions of surface atoms. As such, a total van der Waals force that can act between surface atoms of adjacent particles is strong, and aggregation tends to occur.

For example, dispersing nanodiamond particles as primary particles in a dispersion medium such as water or an organic solvent is difficult. Therefore, the surface of nanodiamond particles is modified so as to impart dispersibility to the nanodiamond particles to suppress aggregation.

### Citation List

### Patent Document

Patent Document 1: Korean Patent Application Publication No: 10-2017-0102762

### Summary of Invention

### Technical Problem

However, there is no known technique for dispersing a carbon material having a graphene structure at nano-scale in a dispersion medium. In particular, graphene structures have poor dispersibility in water and cannot serve a scaffold for reactions because they do not have reactive functional groups on the surface, and it has been difficult to improve the dispersibility of graphene structures by modifying the surface as in the case of nanodiamonds.

Patent Document 1 discloses an onion-like carbon provided with a nanodiamond core and a graphene shell formed at an outer side of the core, the onion-like carbon being produced by annealing a nanodiamond powder at from 1000 to 1400°C. However, Patent Document 1 does not include description of dispersing the onion-like carbon at nano-scale in a dispersion medium.

As such, an object of the present disclosure is to provide a dispersion composition in which a nanocarbon material having a graphene structure is dispersed at nano-scale in a dispersion medium. Another object of the present disclosure is to provide a nanocarbon material that has a graphene structure and has excellent dispersibility in a dispersion medium.

### Solution to Problem

That is, the present disclosure provides a nanocarbon material dispersion composition including a dispersion medium and the nanocarbon material dispersed at nano-scale in the dispersion medium, the nanocarbon material including a nanodiamond particle and a graphene layer formed on the surface of the nanodiamond particle, in which the nanocarbon material has a wavenumber, which corresponds to a peak-top value in a wavenumber range of 1580 ± 50 cm⁻¹ in a Raman spectrum, from 1585 cm⁻¹ to 1630 cm⁻¹; and the nanocarbon material has a peak that appears at 2θ = 43 to 44° in an XRD analysis.

In the nanocarbon material dispersion composition, an average dispersed particle size (D50) of the nanocarbon material is preferably 100 nm or less that is obtained by a dynamic light scattering method.

The nanocarbon material preferably includes a surface-modified nanocarbon material in which a surface of the nanocarbon material is modified by a group represented by Formula (I) below:

-X-R (I)

where in Formula (I), X represents an amino group, an ether bond, an ester bond, a phosphinic acid group, a phosphonic acid group, a phosphoric acid ester, a sulfide bond, a carbonyl group, an amide group, an imide bond, a thiocarbonyl group, a siloxane bond, a sulfuric acid ester group, a sulfonyl group, a sulfone group, a sulfoxide, or a group in which two or more of those listed above are bonded, and a bond extending left from X binds to the nanocarbon material; R represents a monovalent organic group, and an atom that binds to X is a carbon atom.

The nanocarbon material preferably includes a nanocarbon material that is surface-modified by a group containing a polyglycerin chain.

The nanocarbon material preferably includes a surface-modified nanocarbon material in which a surface of the nanocarbon material is modified by a group represented by Formula (1) below:

-X¹-R¹ (1)

where in Formula (1), X¹ represents -Si-, -NH-, -O-, -O-C(=O)-, -C(=O)-O-, - NH-C(=O)-, -C(=O)-NH-, or -S-, and a bond extending left from X¹ binds to the nanocarbon material; R¹ represents a substituted or unsubstituted monovalent hydrocarbon group, and an atom that binds to X¹ is a carbon atom.

The dispersion medium preferably includes water, an aliphatic hydrocarbon, an aromatic hydrocarbon, an alicyclic hydrocarbon, an alcohol, an ether, an ester, an ionic liquid, or a lubricant base.

The present disclosure also provides a nanocarbon material including a nanodiamond particle and a graphene layer formed on a surface of the nanodiamond particle, wherein
a surface of the nanocarbon material is modified by a group represented by Formula (I) below:

   -X-R (I)
where in Formula (I), X represents an amino group, an ether bond, an ester bond, a phosphinic acid group, a phosphonic acid group, a phosphoric acid ester, a sulfide bond, a carbonyl group, an amide group, an imide bond, a thiocarbonyl group, a siloxane bond, a sulfuric acid ester group, a sulfonyl group, a sulfone group, a sulfoxide, or a group in which two or more of those listed above are bonded, and a bond extending left from X binds to the nanocarbon material; R represents a monovalent organic group, and an atom that binds to X is a carbon atom.

The present disclosure also provides a member including a base material and a coating film that is formed of a nanocarbon material, the coating film being provided on a surface of the base material, in which
the coating film has a wavenumber, which corresponds to a peak-top value in a wavenumber range of 1580 ± 50 cm⁻¹ in a Raman spectrum, from 1585 cm⁻¹ to 1630 cm⁻¹; and the coating film has a peak that appears at 2θ = 43 to 44° in an XRD analysis.

### Advantageous Effects of Invention

In the nanocarbon material dispersion composition according to an embodiment of the present disclosure, the nanocarbon material having a graphene structure is dispersed at nano-scale in the dispersion medium. Furthermore, the nanocarbon material according to an embodiment of the present disclosure has a graphene structure and has excellent dispersibility in the dispersion medium.

### Description of Embodiments

### Nanocarbon Material Dispersion Composition

A nanocarbon material dispersion composition according to an embodiment of the present disclosure includes at least a dispersion medium and a nanocarbon material dispersed at nano-scale in the dispersion medium.

The nanocarbon material includes a nanodiamond particle and a graphene layer formed on the surface of the nanodiamond particle. The graphene layer is preferably stacked on a portion of the nanodiamond particle surface, and a portion of the nanodiamond particle surface is preferably exposed. The graphene layer may be a single layer, or may be a graphite layer of stacked graphene.

The nanocarbon material preferably has a lattice vibration band derived from diamond (generally in the range from 1323 to 1333 cm⁻¹) in a Raman spectrum obtained by Raman spectroscopy. The presence of such a peak in the Raman spectrum indicates that a diamond structure is present. Note that the lattice vibration band derived from diamond is not required because it may not be observed when the amount of graphene is large. The presence of diamond structure is preferably confirmed by X-ray diffraction (XRD) analysis.

The nanocarbon material preferably shows peaks in the G-band (generally in the range from 1550 to 1650 cm⁻¹), the D-band (generally in the range from 1300 to 1400 cm⁻¹), and the G'-band (generally in the range from 2650 to 2750 cm⁻¹) in a Raman spectrum obtained by Raman spectroscopy. The presence of such peaks in the Raman spectrum means that a graphene structure or a structure similar to a graphene structure is present, that a structure derived from a defect in a graphene structure or a structure similar to a structure derived from a defect in a graphene structure is present, and that a functional group is included.

In particular, it can be said that usually, the less intense the D-band is, the more well-defined graphene structure or structure similar to a graphene structure there is. Also, the fact that the D-band can be confirmed means that a functional group is present, and that a structure derived from a defect in a graphene structure or a structure similar to a structure derived from a defect in a graphene structure is present. Such a nanocarbon material can exhibit properties different from those of ordinary graphene.

The nanocarbon material has a wavenumber, which corresponds to a peak-top value in a wavenumber range of 1580 ± 50 cm⁻¹ in a Raman spectrum obtained by Raman spectroscopy, from 1585 cm⁻¹ to 1630 cm⁻¹ (preferably from 1590 cm⁻¹ to 1620 cm⁻¹). When the wavenumber corresponding to the peak-top value is within the above range, the nanocarbon material has good dispersibility in the dispersion medium.

The wavenumber range of 1580 ± 50 cm⁻¹ is a range corresponding to the G-band. It can be said that usually, the more intense and the sharper the G-band is, the more well-defined graphene structure or structure similar to a graphene structure there is. In the G-band, OH groups (near 1650 cm⁻¹) and C=O groups (near 1745 cm⁻¹) overlap, and a peak-top value of a signal present in from 1585 cm⁻¹ to 1850 cm⁻¹, which is the sum of the OH groups and the C=O groups, is usually from 1585 cm⁻¹ to 1643 cm⁻¹. It is known that the peak-top value shifts to a lower wavenumber when the amount of graphene increases, and as such, the amount of graphene can be inferred from the Raman shift value. That is, the fact that the wavenumber corresponding to a peak-top value in a wavenumber range of 1580 ± 50 cm⁻¹ in a Raman spectrum is from 1585 cm⁻¹ to 1630 cm⁻¹ means that the nanocarbon material has a certain amount of a graphene structure or a structure similar to a graphene structure.

The Raman spectroscopy can be performed using a known or commonly used Raman spectrometer. The peak-top value can be determined as follows. 36 points in a small range are each measured for two times. The total value of the two times of measurements is treated as a measurement value, and the average value of the measurement values of the 36 points is treated as one round of measurement data. Then, the measurement is performed at three randomly selected locations, and the average value of measurement data of the three locations is used to determine the peak-top value.

When the nanocarbon particles have a surface-modifying group other than a hydroxy group, a carboxy group, an amino group, or another group present on the nanodiamond particle surface that is a functional group intrinsic to nanodiamonds, the Raman spectroscopy is performed with the surface-modifying group removed. When the surface-modifying group is an organic group, the organic group can be burned off by a heat treatment. The temperature in the heat treatment is preferably lower than the temperature condition at which the graphene layer is formed, and is, for examples, from 100 to 500°C.

The nanocarbon material has a peak at 2θ = 43 to 44° in an XRD analysis. Since the peak is a peak derived from diamond (a peak derived from the (111) plane), the presence of the peak means that the nanocarbon material has a diamond structure.

The nanocarbon material preferably has a functional group (surface-modifying group) that modifies the surface of the nanocarbon material. The surface-modifying group preferably contains an organic group. The organic group is more preferably an organic group having 4 or more (for example, from 4 to 25) carbons, more preferably an organic group having 6 or more (for example, from 6 to 22) carbons, and particularly preferably an organic group having 8 (for example, from 8 to 20) or more carbons. When the surface-modifying group contains an organic group, it is inferred that the interaction between the individual nanocarbon materials in the dispersion medium is weakened, and the nanocarbon material tends to have further improved dispersibility in the dispersion medium.

Examples of the organic group include a substituted or unsubstituted hydrocarbon group, a substituted or unsubstituted heterocyclic group, and a group in which two or more of the aforementioned hydrocarbon group and/or the aforementioned heterocyclic group are bonded. Specific examples of the organic group include organic groups of the monovalent organic groups exemplified and described as R in Formula (I) described below.

The surface-modifying group is preferably a group represented by Formula (I) below. That is, the nanocarbon material preferably is a surface-modified nanocarbon material (nanocarbon particles) in which the surface of the nanocarbon material is modified by a group represented by Formula (I) below:

-X-R (I)

where in Formula (I), X represents a linking group, and a bond extending left from X binds to the nanocarbon material; R represents a monovalent organic group, and an atom that binds to X is a carbon atom.

In Formula (I) above, X represents a linking group, such as an amino group (-NR^{a}-), an ether bond (-O-), an ester bond (-C(=O)O-), a phosphinic acid group (-PH(=O)O-), a phosphonic acid group (-P(-OH)(=O)O-), a phosphoric acid ester (-OP(=O)(OH)-O-), a sulfide bond (-S-), a carbonyl group (-C(=O)-), an amide group (-C(=O)-NR^{a}-), a urethane bond (-R^{a}H-C(=O)-O-), an imide bond (-C(=O)-NR^{a}-C(=O)-), a thiocarbonyl group (-C(=S)-), a siloxane bond (-Si-O-), a sulfuric acid ester group (-O-S(=O)₂-O-), a sulfonyl group (-S(=O)₂-O-), a sulfone group (-S(=O)₂-), a sulfoxide (-S(=O)-), or a group in which two or more of those listed above are bonded. In an asymmetric divalent group, the direction of the divalent group with respect to the nanocarbon material side or the polyglycerin side is not limited. The above-described R^{a} represents a hydrogen atom or a monovalent organic group. Examples of the monovalent organic group represented by R^{a} include those exemplified and described as the monovalent organic group represented by R.

Examples of the monovalent organic group of R include a substituted or unsubstituted hydrocarbon group (a monovalent hydrocarbon group), a substituted or unsubstituted heterocyclic group (a monovalent heterocyclic group), and a group in which two or more of the aforementioned monovalent hydrocarbon group and/or the aforementioned monovalent heterocyclic group are bonded. The bonded groups may be directly bonded or may be bonded via a linking group. Examples of the linking group include an amino group, an ether bond, an ester bond, a phosphinic acid group, a sulfide bond, a carbonyl group, an organic group-substituted amide group, an organic group-substituted urethane bond, an organic group-substituted imide bond, a thiocarbonyl group, a siloxane bond, and a group in which two or more of those listed above are bonded.

Examples of the hydrocarbon group of the monovalent organic group include, for example, an aliphatic hydrocarbon group, an alicyclic hydrocarbon group, an aromatic hydrocarbon group, and a group in which two or more of those listed above are bonded.

Examples of the aliphatic hydrocarbon group include an alkyl group, an alkenyl group, and an alkynyl group. Examples of the alkyl group include a C₁₋₂₂ alkyl group, such as a methyl group, an ethyl group, a propyl group, an isopropyl group, a butyl group, a hexyl group, an octyl group, an isooctyl group, a decyl group, and a dodecyl group (preferably a C₂₋₂₀ alkyl group, and more preferably a C₃₋₁₈ alkyl group). Examples of the alkenyl group include a C₂₋₂₂ alkenyl group, such as a vinyl group, an allyl group, a methallyl group, a 1-propenyl group, an isopropenyl group, a 1-butenyl group, a 2-butenyl group, a 3-butenyl group, a 1-pentenyl group, a 2-pentenyl group, a 3-pentenyl group, a 4-pentenyl group, a 5-hexenyl group, and an oleyl group (preferably a C₄₋₂₀ alkenyl group, and more preferably a C₈₋₁₈ alkenyl group). Examples of the alkynyl group include a C₂₋₂₂ alkynyl group, such as an ethynyl group and a propynyl group (preferably a C₄₋₂₀ alkynyl group, and more preferably a C₈₋₁₈ alkynyl group).

Examples of the alicyclic hydrocarbon group include: a C₃₋₁₂ cycloalkyl group, such as a cyclopropyl group, a cyclobutyl group, a cyclopentyl group, a cyclohexyl group, and a cyclododecyl group; a C₃₋₁₂ cycloalkenyl group, such as a cyclohexenyl group; and a C₄₋₁₅ crosslinked cyclic hydrocarbon group, such as a bicycloheptanyl group and a bicycloheptenyl group.

Examples of the aromatic hydrocarbon group include a C₆₋₁₄ aryl group, such as a phenyl group and a naphthyl group (especially, a C₆₋₁₀ aryl group).

Examples of the heterocycle forming the above heterocyclic group include an aromatic heterocycle and a non-aromatic heterocycle. Examples of such a heterocycle include a 3 to 10-membered ring (preferably a 4 to 6-membered ring) having a carbon atom and at least one heteroatom (e.g., oxygen atom, sulfur atom, and nitrogen atom) as atoms constituting the ring, and a condensed ring thereof. Specific examples thereof include heterocycles containing an oxygen atom as a heteroatom (e.g., 3-membered rings, such as an oxirane ring; 4-membered rings, such as an oxetane ring; 5-membered rings, such as a furan ring, a tetrahydrofuran ring, an oxazole ring, an isoxazole ring, and a γ-butyrolactone ring; 6-membered rings, such as a 4-oxo-4H-pyran ring, a tetrahydropyran ring, and a morpholine ring; condensed rings, such as a benzofuran ring, an isobenzofuran ring, a 4-oxo-4H-chromene ring, a chroman ring, and an isochroman ring; crosslinked rings, such as a 3-oxatricyclo[4.3.1.1^{4,8}]undecan-2-one ring and a 3-oxatricyclo[4.2.1.0^{4,8}]nonan-2-one ring), heterocycles containing a sulfur atom as a heteroatom (e.g., 5-membered rings, such as a thiophene ring, a thiazole ring, an isothiazole ring, and a thiadiazole ring; and 6-membered rings, such as a 4-oxo-4H-thiopyran ring; condensed rings, such as a benzothiophene ring), and heterocycles containing a nitrogen atom as a heteroatom (e.g., 5-membered rings, such as a pyrrole ring, a pyrrolidine ring, a pyrazole ring, an imidazole ring, and a triazole ring; 6-membered rings, such as an isocyanuric ring, a pyridine ring, a pyridazine ring, a pyrimidine ring, a pyrazine ring, a piperidine ring, and a piperazine ring; condensed rings, such as an indole ring, an indoline ring, a quinoline ring, an acridine ring, a naphthyridine ring, a quinazoline ring, and a purine ring).

Furthermore, examples of the group in which an aliphatic hydrocarbon group and an alicyclic hydrocarbon group are bonded include a cyclohexylmethyl group and a methylcyclohexyl group. Examples of the group in which an aliphatic hydrocarbon group and an aromatic hydrocarbon group are bonded include a C₇₋₁₈ aralkyl group (particularly, a C₇₋₁₀ aralkyl group), such as a benzyl group and a phenethyl group; a C₆₋₁₀ aryl-C₂₋₆ alkenyl group, such as a cinnamyl group; a C₁₋₄ alkyl-substituted aryl group, such as a tolyl group; and a C₂₋₄ alkenyl-substituted aryl group, such as a styryl group.

Examples of the group in which two or more of the monovalent hydrocarbon group and/or the monovalent heterocyclic group are bonded via a linking group include a group in which the monovalent hydrocarbon group and/or the monovalent heterocyclic group is bonded to an alkoxy group, an alkenyloxy group, an alkynyloxy group, an aryloxy group, an aralkyloxy group, an acyloxy group, an alkylthio group, an alkenylthio group, an arylthio group, an aralkylthio group, an acyl group, an alkenylcarbonyl group, an arylcarbonyl group, an aralkylcarbonyl group, an alkoxycarbonyl group, an alkenyloxycarbonyl group, an aryloxycarbonyl group, an aralkyloxycarbonyl group, a dialkylamino group, an acylamino group, an oxetanyl group-containing group, or a carbamoyl group; or a group in which the monovalent hydrocarbon group and/or the monovalent heterocyclic group is bonded to two or more of the groups listed above.

The monovalent organic group may have a substituent. Examples of the substituent include: a halogen atom, such as a fluorine atom, a chlorine atom, a bromine atom, and an iodine atom; a cyano group; an isocyanate group; an isothiocyanate group; a hydroxy group; a carboxy group; an amino group; a monosubstituted amino group; a thiol group; and a phosphoric acid group.

The group represented by Formula (I) above is particularly preferably a group represented by Formula (1) below or a group containing a polyglycerin chain.

-X¹-R¹ (1)

where in Formula (1), X¹ represents -Si-, -NH-, -O-, -O-C(=O)-, -C(=O)-O-, - NH-C(=O)-, -C(=O)-NH-, or -S-, and a bond extending left from X¹ binds to the nanocarbon material; R¹ represents a substituted or unsubstituted monovalent hydrocarbon group, and an atom that binds to X¹ is a carbon atom.

The number of carbons in R¹ above is preferably from 4 to 25, more preferably from 6 to 22, and even more preferably from 8 to 20. When the number of carbon atoms is 4 or more, the steric hindrance between the surface-modifying groups is sufficient, and dispersion in the dispersion medium is facilitated. When the number of carbon atoms is 25 or less, the surface-modifying groups is kept from being entangled, and dispersion in the dispersion medium is facilitated.

The monovalent hydrocarbon group in R¹ above may have the substituent. Furthermore, the monovalent hydrocarbon group is preferably free of functional groups containing active hydrogen (such as a hydroxy group, a carboxy group, an amino group, a monosubstituted amino group, a thiol group, and a phosphoric acid group).

R¹ above preferably contains a hydrocarbon group having 4 or more consecutive carbon atoms in a linear chain. Examples of such a hydrocarbon group include a linear alkylene group, such as a tetramethylene group, a pentamethylene group, a hexamethylene group, a heptamethylene group, an octamethylene group, a nonamethylene group, and a decamethylene group; a branched alkylene group, such as a 2-ethylhexamethylene group; a linear alkenylene group, such as a 1-butenylene group, a 2-butenylene group, a 1-pentenylene group, a 2-pentenylene group, and a 3-pentenylene group; a branched alkenylene group, such as a 2-methyl-2-butenylene group; an alicyclic hydrocarbon group having 4 or more carbons, such as a cyclohexyl group; and an aromatic hydrocarbon group having 6 or more carbons, such as a phenyl group.

In Formula (1), a molar ratio of carbon atoms to a total amount of heteroatoms selected from the group consisting of nitrogen atoms, oxygen atoms, sulfur atoms, and silicon atoms is preferably 4.5 or higher, more preferably 5 or higher, and even more preferably 5.5 or higher. When the molar ratio is 4.5 or greater, dispersibility in the dispersion medium is superior. The molar ratio is not particularly limited but may be, for example, 22 or lower, or 20 or lower.

In Formula (1) above, X¹ is preferably -O-, -O-C(=O)-, -C(=O)-O-, or -NH-. In this case, the surface-modified nanocarbon material having excellent dispersibility in the dispersion medium can be more easily produced.

In Formula (1) above, when X¹ is -O-, -O-C(=O)-, or -C(=O)-O-, R¹ is preferably a linear or branched hydrocarbon group having from 8 to 20 carbons.

In Formula (1) above, when X¹ is -NH-, R¹ is preferably a substituted or unsubstituted aliphatic hydrocarbon group containing from 8 to 20 carbon atoms, and more preferably a substituted or unsubstituted unsaturated aliphatic hydrocarbon group. Furthermore, when X is -NH-, R¹ is preferably a monovalent hydrocarbon group containing a hydrocarbon group having 4 or more consecutive carbon atoms in a linear chain.

Examples of the group containing a polyglycerin chain include a group having a polyglyceryl group, and a group in which a hydrogen atom of a hydroxy group in at least a part of the polyglyceryl group is substituted with a monovalent organic group.

The group containing a polyglycerin chain is preferably a polyglycerin chain-containing surface-modifying group represented by Formula (2) below.

-(X²C₃H₅)-(OC₃H₅)p-(X³R²)q (2)

where in Formula (2), p represents an integer of 1 or greater, and q represents an integer satisfying q = p + 2; X² represents a divalent group, and the bond extending left from X² in [X²C₃H₅] binds to the nanocarbon material; [X³R²] represents a terminal of the polyglycerin chain, X³ represents a single bond or a divalent group, and R² represents a hydrogen atom or a monovalent organic group.

[X²C₃H₅] in Formula (2) above is represented by [-X²-CH₂-C(-)H-CH₂-]. X² in [X²C₃H₆] binds to the nanocarbon material, and the two C atoms each binds to O in [OC₃H₅] or X² in [X²R²]. X² in [X²C₃H₆] represents a divalent group.

Examples of the divalent group includes the divalent groups exemplified and described as X in Formula (I) above. Of these, the divalent group is preferably -NR^{a}-, -O-, -C(=O)O-, -PH(=O)O-, or -S-, more preferably -NR^{a}-, -O-, or -C(=O)O-.

[OC₃H₅] with p in Formula (2) is a structure derived from glycerin represented by [-O-CH₂-C(-)H-CH₂-] and forms a polyglycerin chain together with [X²C₃H₅]. p represents a repeating unit of [OC₃H₅] and is an integer of 1 or greater, preferably from 3 to 20, more preferably from 5 to 15. p may be the same or different in the group containing a plurality of polyglycerin chains.

In Formula (2), [X³R²] represents a terminal of the polyglycerin chain and binds to C in [X²C₃H₅] or C in [OC₃H₆]. R² represents a hydrogen atom or a monovalent organic group.

X³ in [X³R²] represents a single bond or a divalent group, and examples of the divalent group include the divalent groups exemplified and described as X² in [X²C₃H₅] above. Of these, X³ is preferably -NR^{a}-, -O-, -C(=O)O-, -O-C(=O)-, - PH(=O)O-, -O-P(=O)(OH)-O-, -S-, -O-S(=O)₂-O-, or -O-S(=O)₂-, more preferably - NR^{a}- or -O-. X² in [X²C₃H₆] above and X³ in [X³R²] above may be the same or different. The plurality of [X³R²] above may be the same or different. X³ in [X³R²] above may be the same or different in the group containing a plurality of polyglycerin chains. q represents an integer of 3 or greater, and the value thereof depends on the value of p and satisfies q = p + 2. q may be the same or different in the group containing a plurality of polyglycerin chains.

When R² is a monovalent organic group, the plurality of R²s in Formula (2) above are preferably the same. Examples of the monovalent organic group include those exemplified and described as the monovalent organic group represented by R in Formula (1). Specifically, examples of the monovalent organic group include a substituted or unsubstituted hydrocarbon group (monovalent hydrocarbon group), a substituted or unsubstituted heterocyclic group (monovalent heterocyclic group), and a group in which two or more of these groups are bonded. The monovalent organic group may have an ionic form.

The bonded groups may be directly bonded or may be bonded via a linking group. The hydrocarbon group in the substituted or unsubstituted hydrocarbon group is preferably an alkyl group, more preferably an alkyl group having from 1 to 18 carbons, still more preferably an alkyl group having from 1 to 6 carbons, and particularly preferably an ethyl group, a propyl group, a butyl group, or a hexyl group.

Specific examples of [X³R²] include OH, NH₂, CH₃, an alkoxy group, an acyl group, a mono- or di-alkylamino group, a mono- or di-alkenylamino group, an alkylamide group, an alkenylamide group, a quaternary ammonium-substituted alkoxy group, a chlorine-substituted alkoxy group, and a polyalkylene oxide group.

The number-average degree of polymerization of glycerin in the polyglycerin chain is preferably from 1 to 100, more preferably from 2 to 40, and still more preferably from 3 to 20. When the number-average degree of polymerization is large, repulsive force sufficiently acts among the nanocarbon materials, which can further improve the dispersibility of the nanocarbon material in the dispersion composition. When the number-average degree of polymerization is 100 or less, entanglement of polyglycerin chains among the nanocarbon materials is reduced, which can further improve the dispersibility of the nanocarbon material in the dispersion composition. The number-average degree of polymerization is defined as the number of glycidol units constituting a polyglycerin chain in a group bonded to one surface functional group of the raw material nanocarbon material. The number of surface functional groups of the raw material nanocarbon material may be obtained by elemental analysis or acid number measurement on the raw material nanocarbon material, or by these two techniques in combination.

A mass ratio of the nanocarbon material to the surface-modifying group [nanocarbon material/surface-modifying group] in the surface-modified nanocarbon material is not limited, but is preferably from 0.5 to 1.0, more preferably from 0.6 to 0.8. When the mass ratio is 0.5 or greater (in particular, 0.6 or greater), properties as a nanocarbon material are less likely to be impaired. When the mass ratio is 1.0 or less (in particular, 0.8 or less), the degree of modification of the surface-modifying group is sufficient, and dispersibility in the dispersion medium is superior. The mass ratio can be determined based on a weight loss rate as measured by thermogravimetric analysis, with the weight loss being considered as the mass of the surface-modifying group.

The dispersion medium is a medium for dispersing the nanocarbon material, and examples of the dispersion medium include water, an organic solvent, and an ionic liquid. As the dispersion medium, only one type or two or more types may be used.

Examples of the organic solvent mentioned above include aliphatic hydrocarbons (in particular, linear saturated aliphatic hydrocarbons), such as hexane, heptane, and octane; aromatic hydrocarbons, such as benzene, toluene, and xylene; alicyclic hydrocarbons, such as cyclohexane and methylcyclohexane; aprotic polar solvents, such as dimethylformamide (DMF), dimethylacetamide, N-methylpyrrolidone, and dimethyl sulfoxide; alcohols, such as methanol; halogenated hydrocarbons, such as chloroform, dichloromethane, dichloroethane, carbon tetrachloride, chlorobenzene, and trifluoromethylbenzene; chain or cyclic ethers, such as diethyl ether, diisopropyl ether, dimethoxyethane, tetrahydrofuran (THF), and dioxane; esters, such as ethyl acetate and butyl acetate; ketones [in particular, chain ketones such as methyl ethyl ketone (MEK) and methyl isobutyl ketone]; and nitriles such as acetonitrile.

In addition, when the nanocarbon material dispersion composition is used as a lubricant, the organic solvent may be a lubricant base. The lubricant base may be a known or commonly-used organic solvent used as a lubricant base, and examples thereof include an organic solvent include polyphenyl ethers, alkylbenzenes, alkylnaphthalenes, ester oils, glycol-based synthetic oils, polyolefin-based synthetic oils, and mineral oils. Specific examples include poly-α-olefins, ethylene-α-olefin copolymers, polybutene, alkylbenzenes, alkylnaphthalenes, polyalkylene glycols, polyphenyl ethers, alkyl-substituted diphenyl ethers, polyol esters, dibasic esters, carbonates, phosphates, silicone oils, fluorinated oils, gas-to-liquids (GTL), and mineral oils. Among these, polyol esters, poly-α-olefins, mineral oils, alkylbenzenes, and polyalkylene glycols are preferable from the viewpoint of further reducing the amount of wear of sliding members.

A content ratio of the nanocarbon material in the nanocarbon material dispersion composition is not limited, but is, for example, from 0.1 ppm by mass to 10 mass%.

The content ratio of the nanocarbon material can be calculated from the absorbance at 350 nm. Note that in a case in which a content ratio of the surface-modified nanocarbon material is a low concentration ratio (e.g., 2000 ppm by mass or less), the content ratio can be determined by using high-frequency inductively-coupled plasma emission spectroscopy (ICP emission spectroscopy) to detect a compound modifying the surface of the nanocarbon material and then calculating the content ratio based on the detected amount.

A content ratio of the dispersion medium in the nanocarbon material dispersion composition is, for example, from 90 to 99.9999 mass%.

The nanocarbon material dispersion composition may include only the nanocarbon material and the dispersion medium, or may include an additional component. Examples of the additional component include surfactants, thickeners, coupling agents, dispersants, rust inhibitors, corrosion inhibitors, freezing point depressants, antifoaming agents, antiwear additives, antiseptics, and colorants. A content ratio of the additional component with respect to the total amount of the nanocarbon material dispersion composition is, for example, 30 mass% or less, preferably 20 mass% or less, more preferably 10 mass% or less, even more preferably 5 mass% or less, and particularly preferably 1 mass% or less. Accordingly, a total content ratio of both the nanocarbon material and the dispersion medium to the total amount of the nanocarbon material dispersion composition is, for example, 70 mass% or greater, preferably 80 mass% or greater, more preferably 90 mass% or greater, even more preferably 95 mass% or greater, and particularly preferably 99 mass% or greater.

The nanocarbon material dispersion composition contains the nanocarbon particles in a highly dispersed state. When the nanocarbon material is particles (nanocarbon particles), the average dispersed particle size (D50) of the nanocarbon particles in the nanocarbon material dispersion composition is, for example, 100 nm or less, preferably 60 nm or less, more preferably 50 nm or less, and even more preferably 30 nm or less. The lower limit of the average dispersed particle size of the nanocarbon particles is, for example, 3 nm. The average dispersed particle size can be measured using a dynamic light scattering (DLS) method.

The nanocarbon material dispersion composition has a haze value of preferably 5 or less, more preferably 3 or less, and even more preferably 1 or less. The nanocarbon material has excellent dispersibility in the nanocarbon material dispersion composition, and thus the nanocarbon material dispersion composition having the haze value described above can be obtained. The haze value can be measured based on JIS K 7136.

The zeta potential of the nanocarbon material in the nanocarbon material dispersion composition may be positive or negative. The zeta potential of the nanocarbon material can be adjusted by a treatment with an acid or an alkali in the production process of the nanocarbon material or by the type of the surface-modifying group.

The nanocarbon material and the nanocarbon material dispersion composition can be preferably used, for example, as an additive to composite materials for imparting the characteristics of fine nanocarbon materials (such as mechanical strength, high refractive index, thermal conductivity, insulating properties, antioxidation properties, crystallization promoting action, and dendrite suppressing action) to a resin (such as a thermosetting resin, a photocurable resin, and a thermoplastic resin) or the like. In addition, a composition obtained by adding the nanocarbon material and/or the nanocarbon material dispersion composition to a resin can be preferably used as, for example, a functional hybrid material, a thermally functional material (such as heat resistant, heat storing, thermo-electrically conductive, and heat insulating materials), a photonic material (such as an organic EL element, an LED, a liquid crystal display, and an optical disk), a bio/biocompatible material, a coating material, a film material (such as a hard coating film for a touch screen or various displays, and a thermal barrier film), a sheet material, a screen material (such as a transmission type transparent screen), a filler material (such as a filler for heat radiation or for improving a mechanical property), a heat resistant plastic substrate material (such as a substrate for a flexible display), a battery material for lithium-ion batteries and next-generation batteries (such as all-solid-state batteries), and a capacitor. In addition, the nanocarbon material and the nanocarbon material dispersion composition can also be used for medical applications, and as a friction-reducing agent or a lubricant applied to a sliding part or the like of a mechanical component (such as that of an automobile or an aircraft).

### Method of Producing Nanocarbon Material and Nanocarbon Material Dispersion Composition

The nanocarbon material can be prepared through heating a nanodiamond material at 1400°C or below to heat the diamond on the nanodiamond particle surface to form graphene layers.

### Heating

When the nanodiamond particles are heated at a high temperature exceeding 1400°C, the surface of the nanodiamond particles is completely covered with the graphene layer. As a result, a functional group (such as a hydroxy group, a carboxy group, or an amino group) present on the nanodiamond particle surface is not exposed on the nanocarbon material surface. Meanwhile, by heating at a low temperature of 1400°C or below, the graphene layer is formed on a portion of the surface of the nanodiamond particles and does not completely cover the surface of the nanodiamond particles. Therefore, a functional group (such as a hydroxy group, a carboxy group, or an amino group) present on the nanodiamond particle surface is exposed on the nanocarbon material surface. As such, the nanocarbon material having a functional group on the surface can be produced.

The temperature in the heating of the nanodiamond particles is preferably from 800 to 1400°C, and more preferably from 800 to 1000°C. When the temperature is within the above range, an appropriate amount of the graphene layer can be formed on the nanodiamond particle surface, and the nanocarbon material having a functional group on the surface can be easily produced. The heating time in the heating is, for example, from 30 minutes to 10 hours, and the pressure is around atmospheric pressure. The heating is preferably performed under an inert gas atmosphere.

Examples of the nanodiamond particles that may be used include detonation nanodiamonds (that is, nanodiamonds produced by a detonation method) and highpressure high-temperature nanodiamonds (that is, nanodiamonds produced by a highpressure high-temperature method). Of these, a detonation nanodiamond is preferred in that dispersibility in a dispersion medium is even better, that is, in that primary particles have a particle size of a single-digit nanometer.

Examples of the detonation nanodiamond include an air-cooled detonation nanodiamond (that is, nanodiamond produced by an air-cooled detonation method) and a water-cooled detonation nanodiamond (that is, nanodiamond produced by a water-cooled detonation method). Among these, air-cooled detonation nanodiamonds are preferable from the perspective that the primary particles thereof are smaller than those of water-cooled detonation nanodiamonds.

The detonation may be performed in an air atmosphere, or may be performed in an inert gas atmosphere, such as a nitrogen atmosphere, an argon atmosphere, or a carbon dioxide atmosphere.

### Oxygen Oxidation

The nanocarbon material resulted from the heating may then undergo oxidation with oxygen. Oxidizing the nanocarbon material with oxygen can reduce the amount of graphene on the surface, and adjusting the treatment time can adjust the amount of graphene on the nanocarbon material surface. The oxygen oxidation is preferably carried out in a gas phase. Examples of the oxygen source in the oxygen oxidation include a gas containing oxygen, such as air. The temperature in the oxygen oxidation is, for example, from 300 to 500°C, and the processing time is, for example, from 30 minutes to 10 hours.

### Disintegration

The nanocarbon material resulted from the heating or the oxygen oxidation may be subjected to a disintegration treatment, as necessary. The disintegrating treatment can be performed using, for example, a high shearing mixer, a high shear mixer, a homomixer, a ball mill, a bead mill, a high pressure homogenizer, an ultrasonic homogenizer, or a colloid mill. It is noted that the disintegration treatment may be performed by a wet process (for example, a disintegration treatment in a state of being suspended in water or the like), or may be performed by a dry process. When the disintegrating treatment is performed by a dry process, drying is preferably performed before the disintegrating treatment. When the disintegration treatment is performed by a wet process using water, the pH can be adjusted to basic, and thus dispersibility in water can be improved. From the viewpoint of minimizing contamination of the bead mill such as zirconia beads, the processing time for performing disintegration treatment using a bead mill is preferably from 1 to 8 hours.

### Centrifugation

A slurry resulted from the disintegration is preferably subjected to a centrifugation treatment using a centrifuge. After the centrifugation treatment, the supernatant liquid is recovered, and an aqueous dispersion of the nanocarbon material is obtained.

### Drying

In a case of obtaining a powder of the nanocarbon material, drying is preferably provided after the centrifugation. For example, a spray drying apparatus or an evaporator is used to evaporate the liquid content of the aqueous dispersion of the nanocarbon material resulted from the centrifugation, and then the resulting residual solid content is dried by heating and drying in a drying oven. The temperature for heating and drying is, for example, from 40 to 150°C. This drying yields a powder of the nanocarbon material.

### Surface Modification

When the nanocarbon material has a surface-modifying group, surface modification is performed after the heating. In the nanocarbon material having undergone heating, because heating was carried out at a low temperature, the graphene layer is formed only on a portion of the surface of the nanodiamond particles, and a functional group present on the nanodiamond particle surface is exposed on the nanocarbon material surface. The surface-modifying group can be introduced by using the functional group as a scaffold for reactions.

The surface-modified nanocarbon material can be prepared via, for example, nano-dispersing the nanocarbon material having a hydroxy group or a carboxy group on the surface in water, and reacting the nanocarbon material in the nano-dispersed state with a compound represented by Formula (II) below in the presence of an acid catalyst (condensation reaction).

R-X-H (II)

where in Formula (II), X represents a linking group; R represents a monovalent organic group, and an atom that binds to X is a carbon atom.

In the condensation reaction, the nanocarbon material that has a hydroxy group and/or a carboxyl group on the surface and that is nano-dispersed in water reacts with the compound represented by Formula (II) above. The hydroxyl group and/or carboxy group in the nanocarbon material and -H in the compound represented by Formula (II) above dehydrates and condenses, resulting in the surface-modified nanocarbon material.

In Formula (II) above, X is the same as X in Formula (I) above, and R is the same as R in Formula (I) above. From the viewpoint of excellent reactivity, X is preferably -Si-, -NH-, -O-, -O-C(=O)-, -C(=O)-O-, -NH-C(=O)-, -C(=O)-NH-, or -S-, and more preferably -NH-, -O-, -C(=O)-O-, -C(=O)-NH-, or -S-.

Specific examples of the compound represented by Formula (II) above include amines, alcohols, carboxylic acids, amide compounds, and thiols. The compound represented by Formula (II) above may be used alone or in a combination or two or more. The compound represented by Formula (II) above is appropriately selected according to the group represented by Formula (I) above.

The condensation reaction is performed while the nanocarbon material is in a state of nano-dispersed in water, that is, the reaction is performed in an aqueous dispersion composition of the nanocarbon material. The aqueous dispersion of the nanocarbon material resulted from the centrifugation can be used as the aqueous dispersion composition of the nanocarbon material. An average dispersed particle size (D50) of the nanocarbon material in the aqueous dispersion composition is preferably from 1 to 100 nm, more preferably from 1 to 50 nm, and even more preferably from 1 to 10 nm. When the average dispersed particle size is within such a range, the amount of hydroxy groups and/or carboxy groups on the nanocarbon material surface is large, and the reaction with the compound represented by Formula (II) above proceeds further. In addition, the resulting surface-modified nanocarbon material has excellent dispersibility.

The compound represented by Formula (II) above preferably has excellent solubility or dispersibility in water in the presence of the acid catalyst. Note that, when the compound represented by Formula (II) above has poor solubility or dispersibility in water, it is possible to dissolve or disperse the compound represented by Formula (II) above in an organic solvent and carry out the reaction in a mixed solvent system of water and the organic solvent. Examples of the organic solvent include those exemplified and explained as the dispersion medium contained in the nanocarbon material dispersion composition.

The acid catalyst can be a known or commonly-used acid catalyst used in, for example, esterification of a carboxylic acid and an alcohol, a dehydration condensation reaction of an alcohol and an amine, a dehydration condensation reaction of an alcohol and a thiol. Examples of the acid catalyst include a sulfonic acid group-containing compound, hydrochloric acid, nitric acid, sulfuric acid, sulfur trioxide, phosphoric acid, boric acid, a trihaloacetic acid (such as trichloroacetic acid and trifluoroacetic acid), a salt thereof (such as an ammonium salt), and an inorganic solid acid. Only one, or two or more of the acid catalysts may be used.

The acid catalyst may be in either a form of a homogeneous catalyst that may dissolve in a solvent or substrate during the reaction or in a form of a heterogeneous catalyst that does not dissolve during the reaction. Examples of the heterogeneous catalyst include a supported catalyst in which an acid component is supported on a carrier.

Examples of the sulfonic acid group-containing compound include an aliphatic sulfonic acid, such as methanesulfonic acid, ethanesulfonic acid, propanesulfonic acid, butanesulfonic acid, dodecanesulfonic acid, hexadecanesulfonic acid, trifluoromethanesulfonic acid, and heptadecafluorooctanesulfonic acid; an alicyclic sulfonic acid, such as 10-camphorsulfonic acid; an aromatic sulfonic acid, such as benzenesulfonic acid, p-toluenesulfonic acid, 2,4,6-trimethylbenzenesulfonic acid, hexylbenzenesulfonic acid, octylbenzenesulfonic acid, decylbenzenesulfonic acid, dodecylbenzenesulfonic acid (DBSA), octadecylbenzenesulfonic acid, 1-naphthalenesulfonic acid, 2-naphthalenesulfonic acid, and butyl-2-naphthalenesulfonic acid; and a sulfonic acid type ion-exchange resin, 3-[trioctylammonio]propane-1-sulfonic acid-triflimide, 4-[trioctylammonio]butane-1-sulfonic acid-triflimide, and a compound represented by Formula (A) below:

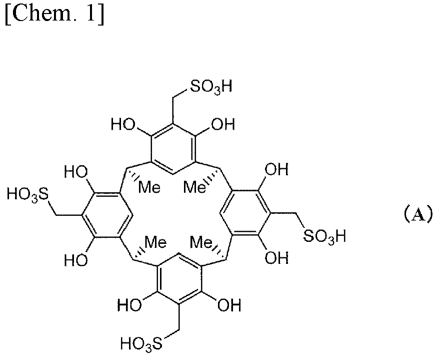

Examples of the inorganic solid acid include silica, silica-alumina, alumina, zeolites, activated clay, and montmorillonite.

Examples of the ammonium salt as the acid catalyst include a salt of an ammonium ion represented by Formula (B-1) below, a salt of an ammonium ion represented by Formula (B-2) below, a salt of an ammonium ion represented by Formula (B-3) below, and a salt of an ammonium ion represented by Formula (B-4) below:

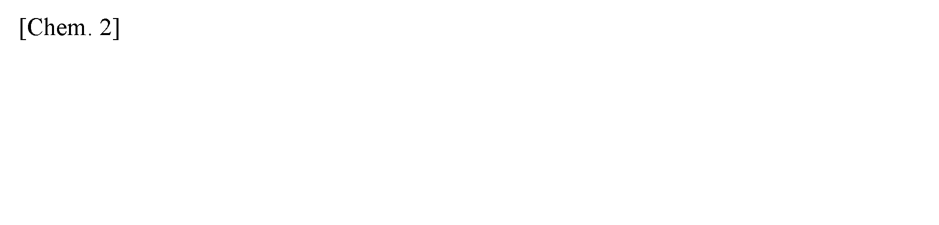

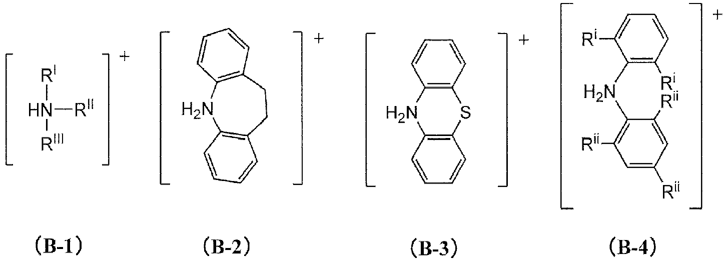

In Formula (B-1), R^{I} to R^{III} all or independently represent a hydrogen atom, an aliphatic hydrocarbon group, or a group containing an aromatic hydrocarbon group. The aliphatic hydrocarbon group is preferably a linear or branched C₁₋₂₂ hydrocarbon group. Examples of the group containing an aromatic hydrocarbon group include an aromatic hydrocarbon group, such as a phenyl group; and a group in which an aliphatic hydrocarbon group and an aromatic hydrocarbon group are bonded, such as a 4-t-butylphenyl group and a mesityl group. Among these, two or more of R^{I} to R^{III} are preferably a group containing an aromatic hydrocarbon group.

The acid anion serving as the counter anion of the ammonium ion represented by Formulas (B-1) to (B-3) above is preferably a sulfonate ion, more preferably an aromatic sulfonate ion, and particularly preferably a p-dodecylbenzene sulfonate ion.

In Formula (B-4), Rⁱ and Rⁱⁱ both or independently represent a hydrogen atom, an aliphatic hydrocarbon group, or a group containing an aromatic hydrocarbon group. The aliphatic hydrocarbon group is preferably a linear or branched C₁₋₄ hydrocarbon group. Examples of the group containing an aromatic hydrocarbon group include an aromatic hydrocarbon group, such as a phenyl group, and a group in which an aliphatic hydrocarbon group and an aromatic hydrocarbon group are bonded. Among these, a hydrogen atom, a methyl group, an isopropyl group, and a phenyl group are preferable.

The acid anion serving as the counter anion of the ammonium ion represented by Formula (B-4) above is preferably a sulfonate ion or a sulfate ion, and particularly preferably a trifluoromethanesulfonate ion, a 10-camphorsulfonate ion, a benzenesulfonate ion, or a sulfate ion.

The acid anion serving as the counter anion of the ammonium ion represented by Formulas (B-1) to (B-4) above may form a complex salt by forming a hydrogen bond with an oxygen atom forming an acid group and a hydrogen atom on a nitrogen atom in Formulas (B-1) to (B-4) above. Regarding the complex salt, one ammonium cation and one acid anion may form one salt, or two ammonium cations and two acid anions may form one salt; the number of ammonium cations and the number of acid anions forming one salt is not particularly limited. Furthermore, the acid anion may form a multimer in one salt. For example, a sulfuric acid that forms sulfate ions may form a structure represented by [H₂SO₄(SO₃)_{X}]. Examples of the complex salt formed by an acid anion and Formula (B-4) above include a compound represented by Formula (C) below:

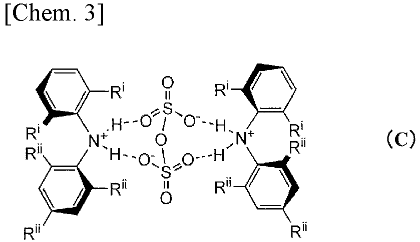

In Formula (C) above, Rⁱ and Rⁱⁱ are the same as those in Formula (B-4) above.

Among these, from the viewpoint of further promoting the reaction in the condensation, the acid catalyst is preferably a sulfonic acid group-containing compound or an ammonium salt of a sulfonic acid group-containing compound.

A ratio of the nanocarbon material to the compound represented by Formula (II) (former:latter, ratio by mass) supplied for the reaction is, for example, from 1:1 to 1:25. In addition, a concentration of the nanocarbon material in the aqueous dispersion composition is, for example, from 1 to 10 mass%, and a concentration of the compound represented by Formula (II) in the aqueous dispersion composition is, for example, from 1 to 60 mass%.

Reaction conditions for the nanocarbon material and the compound represented by Formula (II) can be appropriately selected from, for example, a temperature from 0 to 100°C, a reaction time from 1 to 48 hours, and a pressure from 1 to 5 atm.

The surface-modifying group having a polyglyceryl group (polyglyceryl group-containing surface-modifying group) has a hydroxy group on the polyglycerin chain. The surface-modified nanocarbon material having the polyglyceryl group-containing surface-modifying group may be formed by ring-opening polymerization of glycidol directly on the nanocarbon material. The surface of the nanocarbon material can be modified with a polyglyceryl group by reacting a hydroxy group, a carboxy group, or an amino group of the nanocarbon material with glycidol. In the ring-opening polymerization of glycidol, another epoxy compound (glycidyl trimethyl ammonium chloride, epichlorohydrin, etc.), an alkylene oxide, or the like may be copolymerized. The nanocarbon material to be reacted with glycidol may be the powder of the nanocarbon material resulted from the drying.

The reaction between the nanocarbon material and glycidol (ring-opening polymerization) can be carried out, for example, by adding glycidol and a catalyst to the nanocarbon material in an inert gas atmosphere and heating to from 50 to 100°C. An acidic catalyst or a basic catalyst can be used as the catalyst. Examples of the acidic catalyst include boron trifluoride etherate, acetic acid, and phosphoric acid. Examples of the basic catalyst include triethylamine, pyridine, dimethylaminopyridine, and triphenylphosphine.

Conditions of ring-opening polymerization of glycidol can be referred to: S. R. Sandler et al., J. Polym. Sci., Polym. Chem. Ed., Vol. 4, 1253 (1966); E. J. Vanderberg, J. Polym. Sci., Polym. Chem. Ed., vol. 23, 915 (1985); and G. R. Newcome et al., Dendritic Macromolecules: Concepts, Syntheses, Perspectives, VCH, Weinheim (1996).

The surface-modified nanocarbon material having the polyglyceryl group-containing surface-modifying group may also be formed by ring-opening polymerization of glycidol on the nanocarbon material whose surface is introduced with a functional group containing active hydrogen. The functional group containing active hydrogen is not limited to particular groups. Examples thereof include an amino group, a hydroxy group, a carboxy group, a mercapto group (thiol group), a phosphinic acid group, and a sulfonyl group. The ring-opening polymerization of glycidol on the nanocarbon material whose surface is introduced with a functional group containing active hydrogen can be performed in the same manner as the ring-opening polymerization of glycidol on the nanocarbon material described above.

The surface-modified nanocarbon material having a group in which a hydrogen atom of a hydroxy group in at least a part of the polyglyceryl group is substituted with a monovalent organic group may be produced, for example, by reacting a surface-modified nanocarbon material having a polyglyceryl group with an alcohol, an isocyanate ester, a carboxylic acid chloride, a carboxylic acid, a carboxylic acid ester, an acid anhydride, a sulfonic acid chloride, an epoxy compound (an epoxy compound other than glycidol), or the like.

For example, when an alcohol is used, the surface-modified nanocarbon material having a group in which a hydrogen atom of a hydroxy group in at least a part of the polyglyceryl group is substituted with a monovalent organic group is formed by reacting a surface-modified nanocarbon material having a polyglyceryl group and the alcohol to cause dehydration condensation and form an ether bond. When an isocyanate ester is used, the surface-modified nanocarbon material having a group in which a hydrogen atom of a hydroxy group in at least a part of the polyglyceryl group is substituted with a monovalent organic group is formed by reacting a surface-modified nanocarbon material having a polyglyceryl group and the isocyanate ester to add the isocyanate group in the isocyanate ester to the hydroxy group described above and form a urethane bond (carbamoyl group). When a carboxylic acid chloride is used, the surface-modified nanocarbon material having a group in which a hydrogen atom of a hydroxy group in at least a part of the polyglyceryl group is substituted with a monovalent organic group is formed by reacting a surface-modified nanocarbon material having a polyglyceryl group and the carboxylic acid chloride to form an ester bond. When the carboxylic acid or acid anhydride is used, the reaction may be progressed in the presence of a condensing agent. Examples of the condensing agent include dicyclohexylcarbodiimide (DCC), 1-ethyl-3-(3-dimethylaminopropyl)carbodiimide hydrochloride (EDC), and 4-(4,6-dimethoxy-1,3,5-triazin-2-yl)-4-methylmorpholinium chloride (DMT-MM).

The reaction with the surface-modified nanocarbon material having a polyglyceryl group may be carried out in a solvent. Examples of the solvent include organic solvents. The reaction can be performed, for example, by adding a catalyst to the nanocarbon material in an inert gas atmosphere and stirring at room temperature. The catalyst is preferably a basic catalyst. Examples of the basic catalyst include a tertiary amine such as triethylamine, pyridine, dimethylaminopyridine, and triphenylphosphine. Note that when the basic catalyst is a liquid, the basic catalyst may be used as the reaction solvent.

The preparation of the surface-modified nanocarbon material may include an additional step. The product resulted from surface modification, such as the condensation reaction, is preferably purified by means of, for example, filtration, centrifugation, extraction, washing with water, neutralization, or a combination thereof. Also, for example, to obtain an aqueous dispersion composition in which the nanocarbon material is in a state of nano-dispersed in water, disintegration may be performed before the condensation.

The nanocarbon material having specific peaks in a Raman spectrum and an XRD analysis can be produced in accordance with the description above. In addition, the nanocarbon material dispersion composition in which the nanocarbon material is dispersed in the dispersion medium is obtained. Further, when the nanocarbon material is obtained as a powder, dispersing the nanocarbon material in the dispersion medium yields the nanocarbon material dispersion composition including the dispersion medium and the nanocarbon material dispersed in the dispersion medium.

Note that, when nanocarbon particle agglutinates remain in the dispersion composition, it is preferable to collect the supernatant liquid after allowing the dispersion composition to stand, and use this supernatant liquid as the nanocarbon material dispersion composition. Furthermore, the nanocarbon material dispersion composition can be produced by solvent exchange, that is, preparing a dispersion liquid of the nanocarbon material, distilling off the reaction solvent in the dispersion liquid by an evaporator or the like, and mixing a new dispersion medium and stirring. When the nanocarbon material dispersion composition results from solvent exchange, it is preferable to add a new dispersion medium, perform washing with water and/or saline, and then remove water by extraction and/or distillation.

### Member

A member according to an embodiment of the present disclosure includes at least a base material and a coating film that is formed of a nanocarbon material and that is provided on a surface of the base material.

The coating film has a wavenumber, which corresponds to a peak-top value in a wavenumber range of 1580 ± 50 cm⁻¹ in a Raman spectrum, from 1585 cm⁻¹ to 1630 cm⁻¹. The coating film has a peak that appears at 2θ = 43 to 44° in an XRD analysis.

Preferred aspects of the peaks of the coating film that are related to Raman spectrum and XRD analysis are the same as the preferred aspects of the peaks of the nanocarbon material that are related to Raman spectrum and XRD analysis.

The coating film is preferably a film formed of the nanocarbon material (that is, a nanocarbon material having a wavenumber, which corresponds to a peak-top value in a wavenumber range of 1580 ± 50 cm⁻¹ in a Raman spectrum, from 1585 cm⁻¹ to 1630 cm⁻¹, and a peak present at 2θ = 43 to 44° in an XRD analysis).

A known or commonly used base material can be used as the base material. Examples of the base material include glass, metal (such as aluminum foil and copper foil), plastics [such as polyethylene, polypropylene, polyethylene terephthalate (PET), a vinyl chloride resin, polycarbonate, and an ABS resin], natural rubber, butyl rubber, foam (such as polyurethane and polychloroprene rubber), wood, woven fabric, nonwoven fabric, cloth, paper (such as high-quality paper, glassine paper, kraft paper, and Japanese washi paper), silicon wafers, ceramics, and composites of those listed above. The base material may be subjected to a known surface treatment (such as ozone treatment, plasma treatment, and corona treatment).

The coating film can be prepared by applying the nanocarbon material dispersion composition to the base material surface and, as necessary, performing an operation such as heating to volatilize the dispersion medium.

Examples of the member include a functional hybrid material, a thermally functional material (such as heat resistant, heat storing, thermo-electrically conductive, and heat insulating materials), a photonic material (such as an organic EL element, an LED, a liquid crystal display, and an optical disk), a bio/biocompatible material, a coating material, a film material (such as a hard coating film for a touch screen or various displays, and a thermal barrier film), a sheet material, a screen material (such as a transmission type transparent screen), a filler material (such as a filler for heat radiation or for improving a mechanical property), a heat resistant plastic substrate material (such as a substrate for a flexible display), a battery material for lithium-ion batteries and next-generation batteries (such as all-solid-state batteries), and a capacitor. Furthermore, the member can also be used in medical applications, or as a sliding part of a mechanical component (such as that of an automobile or an aircraft).

Each aspect disclosed in the present specification can be combined with any other feature disclosed herein. Note that each of the configurations, combinations thereof, or the like in each of the embodiments are examples, and additions, omissions, replacements, and other changes to the configurations may be made as appropriate without departing from the spirit of the present disclosure. In addition, each aspect of the invention according to the present disclosure is not limited by the embodiments or the following examples but is limited only by the claims.

### Examples

An embodiment of the present invention will be described in further detail below based on examples.

### Example 1

Nanocarbon particles having a graphene layer on the nanodiamond particle surface and a dispersion composition of the nanocarbon particles were produced through the following steps.

### Preparation of Detonation Nanodiamond Particles

First, the formation of nanodiamonds by a detonation method was performed. In the present formation, first, a molded explosive attached with an electric detonator was placed inside a pressure-resistant vessel for detonation, and the vessel was sealed. The vessel was made of iron and had a capacity of 15 m³. As the explosive, 0.50 kg of a mixture of TNT and RDX was used. The mass ratio of the TNT and RDX (TNT/RDX) in the explosive was 50/50. The electric detonator was then triggered to detonate the explosive in the vessel (formation of nanodiamond by detonation method). Then, the container was allowed to stand at room temperature for 24 hours to lower the temperatures of the container and its interior. After the cooling, a nanodiamond crude product (containing the aggregate of the nanodiamond particles and soot formed in the above detonation method), which adhered to the inner wall of the container, was scraped off with a spatula, and the nanodiamond crude product was thereby collected.

The nanodiamond particle crude product obtained by performing the formation as described above multiple times was then subjected to an acid treatment. Specifically, a slurry obtained by adding 6 L of a 10% by mass hydrochloric acid to 200 g of the nanodiamond crude product was subjected to a heat treatment under reflux at normal pressure conditions for 1 hour. The heating temperature in this acid treatment was from 85 to 100°C. Then, after cooling, the solid (containing the nanodiamond agglutinates and soot) was washed with water by decantation. The solid was repeatedly washed with water by decantation until the pH of a precipitation liquid reached 2 from the low pH side.

An oxidation treatment was then performed. Specifically, 6 L of 98% by mass sulfuric acid and 1 L of 69% by mass nitric acid were added to the precipitate solution (containing the nanodiamond aggregate) obtained through decantation after the acid treatment to form a slurry, and then the slurry was subjected to heat treatment under reflux at normal pressure conditions for 48 hours. The heating temperature in this oxidation treatment was from 140 to 160°C. Then, after cooling, the solid (containing the nanodiamond agglutinates) was washed with water by decantation. The initial supernatant liquid from the water washing was colored, and thus washing of the solid content with water by decantation was repeated until the supernatant liquid became visually transparent.

Next, the precipitation liquid (the liquid containing the nanodiamond agglutinates) obtained through the water-washing treatment described above was subjected to drying, resulting in a dried powder (detonation nanodiamond agglutinates). Evaporation to dryness performed with the use of an evaporator was employed as a technique for the drying treatment in the drying.

### Heating

30 g of the dried powder of nanodiamonds prepared as described above was placed in an SUS-made sample tube without a weir. In a rotary kiln (product name "Desktop Rotary Kiln," available from Takasago Thermal Engineering Co., Ltd.), nitrogen gas was continuously passed through a furnace core tube at a flow rate of 1 L/min for 30 minutes, and the set temperature was increased to 800°C. The rate of increase was set to 10°C/min from room temperature to 100°C and 1°C/min from 100°C to 800°C, and the duration of the treatment was 3 hours. In this way, a graphene layer was formed on the nanodiamond surface, resulting in graphene layer-containing nanodiamonds.

### Oxygen oxidation

Next, 4.5 g of the graphene layer-containing nanodiamonds prepared as described above was allowed to stand inside a furnace core tube of a gas atmosphere furnace (product name "Gas Atmosphere Tube Furnace KTF045N1", available from Koyo Thermo Systems Co., Ltd.), and nitrogen gas was continuously passed through the furnace core tube at a flow rate of 1 L/min for 30 minutes. Then, the flowing gas was switched from nitrogen to a mixed gas of oxygen and nitrogen, and the mixed gas was continuously passed through the furnace core tube at a flow rate of 1 L/min. The oxygen concentration in the mixed gas is 4 vol.%. After switching to the mixed gas, the temperature inside the furnace was raised to a temperature set for heating of 400°C. The oxygen oxidation treatment was performed on the graphene layer-containing nanodiamonds in the furnace while the temperature inside the furnace was maintained at 400°C. The duration of the treatment was 3 hours.

### Disintegration

The disintegration was then performed. Specifically, first, 0.9 g of graphene layer-containing nanodiamonds having undergone the oxygen oxidation and 29.1 mL of pure water were added to a 50 mL sample bottle and mixed, resulting in approximately 30 mL of a slurry. After adjusting the pH to 10 with 1N aqueous ammonia, the slurry was subjected to an ultrasonic treatment. In the ultrasonic treatment, the slurry was subjected to ultrasonic irradiation for 2 hours using an ultrasonic irradiator (product name "Ultrasonic Cleaner AS-3", available from AS ONE Corporation). Thereafter, bead milling was performed using a bead milling apparatus (trade name "Parallel 4-Tube Sand Grinder Model LSG-4U-2L", available from Aimex Co., Ltd.). Specifically, 30 mL of the slurry having undergone the ultrasonic irradiation and zirconia beads with a size of 30 µm were placed in a 100 mL vessel (available from Aimex Co., Ltd.) serving as a mill vessel, and the vessel was sealed. Then, the apparatus was turned on to perform bead milling. In this bead milling, the amount of zirconia beads that were charged was, for example, 33 vol.% of the capacity of the mill vessel, the rotational speed of the mill vessel was 2570 rpm, and the duration of the milling was 2 hours.

### Centrifugation

Next, the slurry having undergone the disintegration as described above was subjected to centrifugation treatment (classification operation) using a centrifuge. The centrifugal force in this centrifugation treatment was 20000 xg, and the duration of the centrifugation was 10 minutes. Next, the supernatant liquid of the solution containing the graphene layer-containing nanodiamonds having undergone the centrifugation treatment was recovered. In this way, an aqueous dispersion in which the graphene layer-containing nanodiamonds are dispersed in pure water (nanocarbon particle aqueous dispersion of Example 1) was prepared.

### Surface Modification

Next, the aqueous dispersion obtained through the disintegration was diluted by adding water to give a solid content concentration of approximately 6 mass%. Then, 0.5 mmol of dodecylbenzenesulfonic acid as an acid catalyst and 2 mmol of 9-octadecenylamine were added to 1 g of the aqueous dispersion, and the mixture was reacted for 8 hours at 80°C while being stirred. After the reaction was completed, 10 mL of toluene was added, and the mixture was cooled to room temperature. Thereafter, washing with water and saturated saline solution was performed, resulting in a toluene dispersion composition of graphene layer-containing nanodiamond particles modified with 9-octadecenylamino group (nanocarbon particle dispersion liquid of Example 1).

### Example 2

A nanocarbon particle aqueous dispersion of Example 2 and a toluene dispersion composition of graphene layer-containing nanodiamond particles modified with 9-octadecenylamino group (nanocarbon particle dispersion liquid of Example 2) were obtained in the same manner as in Example 1, except that the graphene layer-containing nanodiamonds obtained through heating in Example 1 was subjected to disintegration without undergoing oxygen oxidation, and that the pH was adjusted to 3.6 using 1N hydrochloric acid instead of being adjusted to 10 using 1N aqueous ammonia during the disintegration.

### Example 3

### Heating

30 g of the dried powder of nanodiamonds prepared in Example 1 was placed in an SUS-made sample tube without a weir. In a rotary kiln (product name "Desktop Rotary Kiln," available from Takasago Thermal Engineering Co., Ltd.), nitrogen gas was continuously passed through a furnace core tube at a flow rate of 1 L/min for 30 minutes, and the set temperature was increased 900°C. The rate of increase was set to 10°C/min from room temperature to 100°C and 1°C/min from 100°C to 900°C, and the duration of the treatment was 3 hours. In this way, a graphene layer was formed on the nanodiamond surface, resulting in graphene layer-containing nanodiamonds.

### Oxygen Oxidation

Next, 4.5 g of the graphene layer-containing nanodiamonds prepared as described above was allowed to stand inside a furnace core tube of a gas atmosphere furnace (product name "Gas Atmosphere Tube Furnace KTF045N1", available from Koyo Thermo Systems Co., Ltd.), and nitrogen gas was continuously passed through the furnace core tube at a flow rate of 1 L/min for 30 minutes. Then, the flowing gas was switched from nitrogen to a mixed gas of oxygen and nitrogen, and the mixed gas was continuously passed through the furnace core tube at a flow rate of 1 L/min. The oxygen concentration in the mixed gas is 4 vol.%. After switching to the mixed gas, the temperature inside the furnace was raised to a temperature set for heating of 400°C. The oxygen oxidation treatment was performed on the graphene layer-containing nanodiamonds in the furnace while the temperature inside the furnace was maintained at 400°C. The duration of the treatment was 3 hours.

### Disintegration

The disintegration was then performed. Specifically, first, 0.9 g of graphene layer-containing nanodiamonds having undergone the oxygen oxidation and 29.1 mL of pure water were added to a 50 mL sample bottle and mixed, resulting in approximately 30 mL of a slurry. After adjusting the pH to 10 with 1N aqueous ammonia, the slurry was subjected to an ultrasonic treatment. In the ultrasonic treatment, the slurry was subjected to ultrasonic irradiation for 2 hours using an ultrasonic irradiator (product name "Ultrasonic Cleaner AS-3", available from AS ONE Corporation). Thereafter, bead milling was performed using a bead milling apparatus (trade name "Parallel 4-Tube Sand Grinder Model LSG-4U-2L", available from Aimex Co., Ltd.). Specifically, 30 mL of the slurry having undergone the ultrasonic irradiation and zirconia beads with a size of 30 µm were placed in a 100 mL vessel (available from Aimex Co., Ltd.) serving as a mill vessel, and the vessel was sealed. Then, the apparatus was turned on to perform bead milling. In this bead milling, the amount of zirconia beads that were charged was, for example, 33 vol.% of the capacity of the mill vessel, the rotational speed of the mill vessel was 2570 rpm, and the duration of the milling was 2 hours.

### Centrifugation

Next, the slurry having undergone the disintegration as described above was subjected to centrifugation treatment (classification operation) using a centrifuge. The centrifugal force in this centrifugation treatment was 20000 xg, and the duration of the centrifugation was 10 minutes. Next, the supernatant liquid of the solution containing the graphene layer-containing nanodiamonds having undergone the centrifugation treatment was recovered. In this way, an aqueous dispersion in which the graphene layer-containing nanodiamonds are dispersed in pure water (nanocarbon particle aqueous dispersion of Example 3) was prepared.

### Surface Modification

Next, the aqueous dispersion obtained through the disintegration was dried using an evaporator, resulting in a black dried powder (drying). The resulting dry powder (100 mg) was added to 12 mL of glycidol placed in a glass reactor, ultrasonicated in an ultrasonic cleaner (trade name "BRANSON 2510", available from Marshall Scientific LLC.) at room temperature for 2 hours, and dissolved. This solution was allowed to react at 140°C for 20 hours while it was being stirred under a nitrogen atmosphere. The reaction mixture was cooled; then, after 120 mL of methanol was added, the reaction mixture was ultrasonicated and then centrifuged at 50400 xg for 2 hours, resulting in a precipitate. To this precipitate, 120 mL of methanol was added, and washing-centrifugation was repeated five times in the same manner. Finally, the precipitate was dialyzed with pure water using a dialysis membrane (Spectra/Prodialysis membrane, MWCO of 12 to 14 kDa) to replace the residual methanol with water and was lyophilized, resulting in a gray powder of hydrophilic graphene layer-containing nanodiamond particles modified with polyglycerin (PG-NC particles).

Pyridine was added to the PG-NC gray powder, and the concentration was adjusted to 4 g/L based on the mass of the graphene layer-containing nanodiamond particles, resulting in a PG-NC particle pyridine dispersion liquid. 5.6 g of n-butyl isocyanate was added to 20 ml of the resulting PG-NC particle pyridine dispersion liquid, and the mixture was stirred at room temperature for 6 hours. Then, 40 mL of hexane was added, and the mixture was centrifuged at 20000 xg for 10 minutes, resulting in a precipitate. After this washing was repeated three times to remove pyridine, the product was allowed to stand in a vacuum dryer for 24 hours at 50°C to obtain a dry solid content. This yielded graphene layer-containing nanodiamonds modified with a group in which at least some of the terminal hydroxyl groups in a polyglycerin chain were end-capped with butyl isocyanate.

Methanol was added to adjust the content ratio of the graphene layer-containing nanodiamonds with respect to the dry solid content to 0.1% by mass. Then, the mixture was centrifuged at 20000 ×g for 10 minutes, and the supernatant was collected, resulting in a methanol dispersion composition of graphene layer-containing nanodiamond particles modified with a group in which at least some of the terminal hydroxyl groups in a polyglycerin chain were end-capped with butyl isocyanate (nanocarbon particle dispersion liquid of Example 3).

### Example 4

A nanocarbon particle aqueous dispersion of Example 4 and a methanol dispersion composition of graphene layer-containing nanodiamond particles modified with a group in which at least some of the terminal hydroxyl groups in a polyglycerin chain were end-capped with butyl isocyanate (nanocarbon particle dispersion liquid of Example 4) were obtained in the same manner as in Example 3, except that the graphene layer-containing nanodiamonds obtained through heating in Example 3 was subjected to disintegration without undergoing oxygen oxidation, and that the pH was adjusted to 3.6 using 1N hydrochloric acid instead of being adjusted to 10 using 1N aqueous ammonia during the disintegration.

### Example 5

### Heating

30 g of the dried powder of nanodiamonds prepared in Example 1 was placed in an SUS-made sample tube without a weir. In a rotary kiln (product name "Desktop Rotary Kiln," available from Takasago Thermal Engineering Co., Ltd.), nitrogen gas was continuously passed through a furnace core tube at a flow rate of 1 L/min for 30 minutes, and the set temperature was increased 1000°C. The rate of increase was set to 10°C/min from room temperature to 100°C and 1°C/min from 100°C to 1000°C, and the duration of the treatment was 3 hours. In this way, a graphene layer was formed on the nanodiamond surface, resulting in graphene layer-containing nanodiamonds.

### Oxygen Oxidation

Next, 4.5 g of the graphene layer-containing nanodiamonds prepared as described above was allowed to stand inside a furnace core tube of a gas atmosphere furnace (product name "Gas Atmosphere Tube Furnace KTF045N1", available from Koyo Thermo Systems Co., Ltd.), and nitrogen gas was continuously passed through the furnace core tube at a flow rate of 1 L/min for 30 minutes. Then, the flowing gas was switched from nitrogen to a mixed gas of oxygen and nitrogen, and the mixed gas was continuously passed through the furnace core tube at a flow rate of 1 L/min. The oxygen concentration in the mixed gas is 4 vol.%. After switching to the mixed gas, the temperature inside the furnace was raised to a temperature set for heating of 400°C. The oxygen oxidation treatment was performed on the graphene layer-containing nanodiamonds in the furnace while the temperature inside the furnace was maintained at 400°C. The duration of the treatment was 3 hours.

### Disintegration

The disintegration was then performed. Specifically, first, 0.9 g of graphene layer-containing nanodiamonds having undergone the oxygen oxidation and 29.1 mL of pure water were added to a 50 mL sample bottle and mixed, resulting in approximately 30 mL of a slurry. After adjusting the pH to 10 with 1N aqueous ammonia, the slurry was subjected to an ultrasonic treatment. In the ultrasonic treatment, the slurry was subjected to ultrasonic irradiation for 2 hours using an ultrasonic irradiator (product name "Ultrasonic Cleaner AS-3", available from AS ONE Corporation). Thereafter, bead milling was performed using a bead milling apparatus (trade name "Parallel 4-Tube Sand Grinder Model LSG-4U-2L", available from Aimex Co., Ltd.). Specifically, 30 mL of the slurry having undergone the ultrasonic irradiation and zirconia beads with a size of 30 µm were placed in a 100 mL vessel (available from Aimex Co., Ltd.) serving as a mill vessel, and the vessel was sealed. Then, the apparatus was turned on to perform bead milling. In this bead milling, the amount of zirconia beads that were charged was, for example, 33 vol.% of the capacity of the mill vessel, the rotational speed of the mill vessel was 2570 rpm, and the duration of the milling was 2 hours.

### Centrifugation

Next, the slurry having undergone the disintegration as described above was subjected to centrifugation treatment (classification operation) using a centrifuge. The centrifugal force in this centrifugation treatment was 20000 xg, and the duration of the centrifugation was 10 minutes. Next, the supernatant liquid of the solution containing the graphene layer-containing nanodiamonds having undergone the centrifugation treatment was recovered. In this way, an aqueous dispersion in which the graphene layer-containing nanodiamonds are dispersed in pure water was prepared (nanocarbon particle aqueous dispersion of Example 5).

### Surface Modification

Next, the aqueous dispersion obtained through the disintegration was dried using an evaporator, resulting in a black dried powder (drying). The resulting dry powder (100 mg) was added to 12 mL of glycidol placed in a glass reactor, ultrasonicated in an ultrasonic cleaner (trade name "BRANSON 2510", available from Marshall Scientific LLC.) at room temperature for 2 hours, and dissolved. This solution was allowed to react at 140°C for 20 hours while it was being stirred under a nitrogen atmosphere. The reaction mixture was cooled; then, after 120 mL of methanol was added, the reaction mixture was ultrasonicated and then centrifuged at 50400 xg for 2 hours, resulting in a precipitate. To this precipitate, 120 mL of methanol was added, and washing-centrifugation was repeated five times in the same manner. Finally, the precipitate was dialyzed with pure water using a dialysis membrane (Spectra/Prodialysis membrane, MWCO of 12 to 14 kDa) to replace the residual methanol with water and was lyophilized, resulting in a gray powder of hydrophilic graphene layer-containing nanodiamond particles modified with polyglycerin (PG-NC particles).

Pyridine was added to the PG-NC gray powder, and the concentration was adjusted to 4 g/L based on the mass of the graphene layer-containing nanodiamond particles, resulting in a PG-NC particle pyridine dispersion liquid. 7.16 g of n-hexyl isocyanate was added to 20 ml of the resulting PG-NC particle pyridine dispersion liquid, and the mixture was stirred at room temperature for 6 hours. Then, 40 mL of hexane was added, and the mixture was centrifuged at 20000 xg for 10 minutes, resulting in a precipitate. After this washing was repeated three times to remove pyridine, the product was allowed to stand in a vacuum dryer for 24 hours at 50°C to obtain a dry solid content. This yielded graphene layer-containing nanodiamonds modified with a group in which at least some of the terminal hydroxyl groups in a polyglycerin chain were end-capped with hexyl isocyanate.

THF was added to adjust the content ratio of the graphene layer-containing nanodiamonds with respect to the dry solid content to 0.1% by mass. Then, the mixture was centrifuged at 20000 ×g for 10 minutes, and the supernatant was collected, resulting in a THF dispersion composition of graphene layer-containing nanodiamond particles modified with a group in which at least some of the terminal hydroxyl groups in a polyglycerin chain were end-capped with hexyl isocyanate (nanocarbon particle dispersion liquid of Example 5).

### Example 6

A nanocarbon particle aqueous dispersion of Example 6 and a THF dispersion composition of graphene layer-containing nanodiamond particles modified with a group in which at least some of the terminal hydroxyl groups in a polyglycerin chain were end-capped with hexyl isocyanate (nanocarbon particle dispersion liquid of Example 6) were obtained in the same manner as in Example 5, except that the graphene layer-containing nanodiamonds obtained through heating in Example 5 was subjected to disintegration without undergoing oxygen oxidation, and that the pH was adjusted to 3.6 using 1N hydrochloric acid instead of being adjusted to 10 using 1N aqueous ammonia during the disintegration.

### Comparative Example 1

2.8 mg of the powder of the graphene layer-containing nanodiamonds obtained through heating in Example 5 (graphene layer-containing nanodiamonds prepared without performing oxygen oxidation and the subsequent steps) was added to approximately 6 mL of isopropyl alcohol (IPA), and the mixture was subjected to ultrasonic treatment for 10 minutes using an ultrasonic irradiator (product name "Ultrasonic Cleaner AS-3", available from AS ONE Corporation). Aggregates were formed in the resulting liquid, and precipitation was confirmed after the liquid was left to stand for 6 hours.

### Comparative Example 2

### Heating

2.0 g of the dried powder of nanodiamonds prepared in Example 1 was placed in an alumina boat and allowed to stand in a furnace core tube of a vacuum annealing furnace (product name "Ultra-compact High-temperature Vacuum Atmosphere Electric Furnace", available from Full-tech Co., Ltd.). After the furnace core tube was evacuated, the set temperature was increased to 1500°C. The duration of the treatment was 3 hours. In this way, a graphene layer was formed on the nanodiamond surface, resulting in graphene layer-containing nanocarbon particles.

The nanocarbon particles were subjected to oxygen oxidation, disintegration, and surface modification in the same manner as in Example 1, resulting in graphene layer-containing nanocarbon particles modified with 9-octadecenylamino group. The graphene layer-containing nanocarbon particles were not dispersed in toluene.

### Comparative Example 3

### Heating

2.0 g of the dried powder of nanodiamonds prepared in Example 1 was placed in an alumina boat and allowed to stand in a furnace core tube of a vacuum annealing furnace (product name "Ultra-compact High-temperature Vacuum Atmosphere Electric Furnace", available from Full-tech Co., Ltd.). After the furnace core tube was evacuated, the set temperature was increased to 1500°C. The duration of the treatment was 3 hours. In this way, a graphene layer was formed on the nanodiamond surface, resulting in graphene layer-containing nanocarbon particles.

The nanocarbon particles were subjected to oxygen oxidation, disintegration, and surface modification in the same manner as in Example 3, resulting in graphene layer-containing nanocarbon particles modified with a group in which at least some of the terminal hydroxyl groups in a polyglycerin chain were end-capped with butyl isocyanate. The graphene layer-containing nanocarbon particles were not dispersed in methanol.

### Evaluation

The following evaluation tests were performed on the dispersion liquids obtained in Examples and Comparative Examples. The conditions in each Example and Comparative Example as well as evaluation results of the resulting dispersion compositions and the like are presented in Table 1.

### Average Dispersed Particle Size

The average dispersed particle sizes (median size, D50) of the nanocarbon particles in the nanocarbon particle aqueous dispersions and the nanocarbon particle dispersion compositions prepared in Examples and Comparative Examples were measured based on the particle size distributions obtained by a dynamic light scattering method. Specifically, the particle size distribution of each type of particles was measured by a dynamic light scattering method (non-contact backscattering method) using an instrument (product name "Zetasizer Nano ZS") available from Malvern Panalytical Ltd. In the table, "-" indicates that measurement was not performed, and "x" indicates that the D50 was 1 µm or greater.

### Raman Spectroscopy

A heat treatment was used to remove the surface-modifying groups of the nanocarbon particles obtained by removing the solvent from the nanocarbon particle aqueous dispersions obtained in Examples and Comparative Examples. Then, Raman spectroscopy was performed on the heat-treated nanocarbon particles. The Raman spectroscopy was performed using the following device and under the following conditions. In the heat treatment, 10 mg of nanocarbon particles were heated to 400°C at a temperature increase rate of 20°C/min in an air atmosphere using a TG/DTA (thermogravimetric-differential thermal analysis) device (product name "EXSTAR6300", available from SII Technology), and the temperature was maintained at 400°C for 5 minutes. Then, the atmosphere was switched to nitrogen gas with everything else as-is, and the nanocarbon particles were allowed to cool to room temperature.

### Measuring device: Raman microscope (product name "Lab RAM Evolution," available from Horiba, Ltd.)

Measuring conditions: one round of measurement data was defined as data measured at a total of 36 points at a measurement interval of 4 µm in a mapping measurement range of 20 µm × 20 µm and in a measurement range from 900 to 1900 cm⁻¹ using a 325 nm laser, a 40x objective lens, a grating of 2400 gr/mm, a 3.2% neutral density filter, a 200 confocal hole, at a exposure time of 4 seconds, and 2 times integration (resolution = 1.58 cm⁻¹ or greater/pixel). The measurement was performed at three different spots to obtain three spectra, which were then averaged to give one spectrum. The reason that this measurement method was used was because the G-band peak varies depending on the location of the measurement in a single measurement.

### XRD Analysis

The XRD analysis was performed using the following device and under the following conditions.

### Measuring device: product name "SmartLab", available from Rigaku Corporation)

Measurement Conditions:
X-ray source: Cu-Kα ray,
X-ray generation current: 200 mA
X-ray generation voltage: 45 kV
Slit angle: 2/3°
Slit width: 0.3 mm, 2θ = 5 to 105°
Step interval: 0.02°
Step measurement time: 4.0 s

**[Table 1]**

| |
|---|
| (Table 1) |

| | Example 1 | Example 2 | Example 3 | Example 4 | Example 5 | Example 6 | Comparative Example 1 | Comparative Example 2 | Comparative Example 3 |
|---|---|---|---|---|---|---|---|---|---|
| Temperature in Heating [°C] | 800 | 800 | 900 | 900 | 1000 | 1000 | 1000 | 1500 | 1500 |
| With or Without Oxygen Oxidation | Present | Absent | Present | Absent | Present | Absent | Absent | Present | Present |
| Wavenumber Corresponding to Peak-top in G-band [cm⁻¹] | 1616 | 1608 | 1615 | 1606 | 1602 | 1592 | 1592 | 1582 | 1582 |
| Dispersibility in Aqueous Dispersion | Good | Good | Good | Good | Good | Good | - | Poor | Poor |
| D50 (Aqueous Dispersion) [nm] | 4.5 | 6.3 | 4.4 | 6.5 | 4.7 | 7.9 | - | - | - |
| Surface-modifying Group | 9-Octadecenyl group | 9-Octadecenyl group | PG (end-capped with butyl isocyanate) | PG (end-capped with butyl isocyanate) | PG (end-capped with hexyl isocyanate) | PG (end-capped with hexyl isocyanate) | - | 9-Octadecenyl group | PG (end-capped with butyl isocyanate) |
| Dispersion medium | Toluene | Toluene | Methanol | Methanol | THF | THF | IPA | Toluene | Methanol |
| D50 (Organic Solvent Dispersed Liquid) [nm] | 18 | 22 | 42 | 40 | 53 | 39 | - | Poor | Poor |

It was confirmed that the nanocarbon particles obtained in the Examples exhibited peaks at the G-band, the D-band, and the G'-band in the Raman spectrum. In addition, it was confirmed that the nanocarbon particles obtained in the Examples had peaks at 2θ = 43 to 44° in the XRD analysis. From these results, it was confirmed that the nanocarbon particles obtained in Examples were particles having a graphene layer on the surface of each of the diamond particles.

In addition, as indicated in Table 1, regarding the nanocarbon particles obtained in Examples, the wavenumbers corresponding to a peak-top value in a wavenumber range of 1580 ± 50 cm⁻¹, which is within the wavenumber range of the G-band in the Raman spectrum, were from 1585 cm⁻¹ to 1630 cm⁻¹. It was also confirmed that the nanocarbon particles obtained in Examples were dispersed at nano-scale in water and various organic solvents. In addition, no precipitation was observed in any of the nanocarbon particle aqueous dispersions and the nanocarbon particle dispersion compositions obtained in Examples after 6 hours from the preparation. Meanwhile, Comparative Example 1 is a reproduction of the experiment disclosed in Patent Document 1, but Patent Document 1 does not have description of preparing an aqueous dispersion using onion-like carbon. In addition, although Patent Document 1 discloses that onion-like carbon is dispersed in IPA, it was confirmed that aggregates were formed in Comparative Example 1 which is a reproduction experiment. Furthermore, the nanocarbon particles obtained in Comparative Examples 2 and 3 had wavenumbers corresponding to a peak-top value in the above wavenumber range that were less than 1585 cm⁻¹, and the nanocarbon particles were not dispersed in water and various organic solvents.

Hereinafter, variations of the invention according to the present disclosure will be described.
[Appendix 1] A nanocarbon material dispersion composition including a dispersion medium and a nanocarbon material dispersed at nano-scale in the dispersion medium, the nanocarbon material including a nanodiamond particle and a graphene layer formed on a surface of the nanodiamond particle, in which the nanocarbon material has a wavenumber, which corresponds to a peak-top value in a wavenumber range of 1580 ± 50 cm⁻¹ in a Raman spectrum, from 1585 cm⁻¹ to 1630 cm⁻¹; and the nanocarbon material has a peak that appears at 2θ = 43 to 44° in an XRD analysis.
[Appendix 2] The nanocarbon material dispersion composition according to Appendix 1, in which the nanocarbon material has a lattice vibration band derived from diamond (generally in the range from 1323 to 1333 cm⁻¹) in a Raman spectrum obtained by Raman spectroscopy.
[Appendix 3] The nanocarbon material dispersion composition according to Appendix 1 or 2, in which the nanocarbon material exhibits a peak in the G-band (generally in a range from 1550 to 1650 cm⁻¹) in a Raman spectrum obtained by Raman spectroscopy.
[Appendix 4] The nanocarbon material dispersion composition according to any one of Appendices 1 to 3, in which the nanocarbon material exhibits a peak in the D-band (generally in a range from 1300 to 1400 cm⁻¹) in a Raman spectrum obtained by Raman spectroscopy.
[Appendix 5] The nanocarbon material dispersion composition according to any one of Appendices 1 to 4, in which the nanocarbon material exhibits a peak in the G'-band (generally in a range from 2650 to 2750 cm⁻¹) in a Raman spectrum obtained by Raman spectroscopy.
[Appendix 6] The nanocarbon material dispersion composition according to any one of Appendices 1 to 5, in which a wavenumber corresponding to a peak-top value in a wavenumber range of 1580 ± 50 cm⁻¹ in a Raman spectrum is from 1590 cm⁻¹ to 1620 cm⁻¹.
[Appendix 7] The nanocarbon material dispersion composition according to any one of Appendices 1 to 6, in which the nanocarbon material has an average dispersed particle size (D50) of 100 nm or less (preferably 60 nm or less, more preferably 50 nm or less, and still more preferably 30 nm or less) that is obtained by a dynamic light scattering method.
[Appendix 8] The nanocarbon material dispersion composition according to any one of Appendices 1 to 7, in which the nanocarbon material has an average dispersed particle size (D50) of 3 nm or greater that is obtained by a dynamic light scattering method.
[Appendix 9] The nanocarbon material dispersion composition according to any one of Appendices 1 to 8, in which the graphene layer is stacked on a portion of the nanodiamond particle surface, and a portion of the nanodiamond particle surface is exposed.
[Appendix 10] The nanocarbon material dispersion composition according to any one of Appendices 1 to 9, in which the nanocarbon material has a surface-modifying group (preferably a group containing an organic group) that modifies a surface of the nanocarbon material.
[Appendix 11] The nanocarbon material dispersion composition according to Appendix 10, in which the organic group is an organic group having 4 or more (such as from 4 to 25) carbons [preferably an organic group having 6 or more (such as from 6 to 22) carbons, more preferably 8 or more (such as from 8 to 20) carbons].
[Appendix 12] The nanocarbon material dispersion composition according to Appendix 10 or 11, in which the organic group is a substituted or unsubstituted hydrocarbon group, a substituted or unsubstituted heterocyclic group, or a group in which two or more of the aforementioned hydrocarbon group and/or the aforementioned heterocyclic group are bonded.
[Appendix 13] The nanocarbon material dispersion composition according to any one of Appendices 10 to 12, in which the surface-modifying group is a group represented by Formula (I) below:

   -X-R (I)

   where in Formula (I), X represents an amino group, an ether bond, an ester bond, a phosphinic acid group, a phosphonic acid group, a phosphoric acid ester, a sulfide bond, a carbonyl group, an amide group, an imide bond, a thiocarbonyl group, a siloxane bond, a sulfuric acid ester group, a sulfonyl group, a sulfone group, a sulfoxide, or a group in which two or more of those listed above are bonded, and a bond extending left from X binds to the nanocarbon material, R represents a monovalent organic group, and an atom that binds to X is a carbon atom.
[Appendix 14] The nanocarbon material dispersion composition according to any one of Appendices 10 to 13, in which the surface-modifying group is a group containing a polyglycerin chain.
[Appendix 15] The nanocarbon material dispersion composition according to Appendix 14, in which the group containing a polyglycerin chain is a group having a polyglyceryl group and/or a group in which a hydrogen atom of a hydroxy group in at least a part of the polyglyceryl group is substituted with a monovalent organic group.
[Appendix 16] The nanocarbon material dispersion composition according to Appendix 14 or 15, in which the group containing a polyglycerin chain is a polyglycerin chain-containing surface-modifying group represented by Formula (2) below:

   -(X²C₃H₅)-(OC₃H₅)p-(X³R²)q (2)

   where in Formula (2), p represents an integer of 1 or greater, and q represents an integer satisfying q = p + 2; X² represents a divalent group, and a bond extending left from X² in [X²C₃H₅] binds to the nanocarbon material; [X³R²] represents a terminal of the polyglycerin chain, X³ represents a single bond or a divalent group, and R² represents a hydrogen atom or a monovalent organic group.
[Appendix 17] The nanocarbon material dispersion composition according to Appendix 16, in which the divalent group is -NR^{a}-, -O-, -C(=O)O-, -PH(=O)O-, or -S-[preferably -NR^{a}-, -O-, or -C(=O)O-)], with R^{a} representing a hydrogen atom or a monovalent organic group.
[Appendix 18] The nanocarbon material dispersion composition according to Appendix 16 or 17, in which p in Formula (2) above is from 3 to 20 (preferably from 5 to 15).
[Appendix 19] The nanocarbon material dispersion composition according to any one of Appendices 10 to 13, in which the surface-modifying group is a group represented by Formula (1) below:

   -X¹-R¹ (1)

   where in Formula (1), X¹ represents -Si-, -NH-, -O-, -O-C(=O)-, -C(=O)-O-, - NH-C(=O)-, -C(=O)-NH-, or -S-, and a bond extending left from X¹ binds to the nanocarbon material, R¹ represents a substituted or unsubstituted monovalent hydrocarbon group, and an atom that binds to X¹ is a carbon atom.
[Appendix 20] The nanocarbon material dispersion composition according to Appendix 19, in which the number of carbon atoms in R¹ is from 4 to 25 (preferably from 6 to 22, more preferably from 8 to 20).
[Appendix 21] The nanocarbon material dispersion composition according to Appendix 19 or 20, in which R¹ includes a hydrocarbon group having 4 or more consecutive carbon atoms in a linear chain.
[Appendix 22] The nanocarbon material dispersion composition according to any one of Appendices 19 to 21, in which in Formula (1) above, a molar ratio of carbon atoms to a total amount of heteroatoms selected from the group consisting of nitrogen atoms, oxygen atoms, sulfur atoms, and silicon atoms is 4.5 or greater (preferably 5 or greater, and more preferably 5.5 or greater).
[Appendix 23] The nanocarbon material dispersion composition according to any one of Appendices 1 to 22, in which the dispersion medium includes water, an aliphatic hydrocarbon, an aromatic hydrocarbon, an alicyclic hydrocarbon, an alcohol, an ether, an ester, an ionic liquid, or a lubricant base.
[Appendix 24] The nanocarbon material dispersion composition according to any one of Appendices 1 to 23, in which a content ratio of the nanocarbon material in the nanocarbon material dispersion composition is from 0.1 ppm by mass to 10 mass%.
[Appendix 25] The nanocarbon material dispersion composition according to any one of Appendices 1 to 24, in which a content ratio of the dispersion medium in the nanocarbon material dispersion composition is from 90 to 99.9999 mass%.
[Appendix 26] The nanocarbon material dispersion composition according to any one of Appendices 1 to 25, in which a total content ratio of both the nanocarbon material and the dispersion medium to the total amount of the nanocarbon material dispersion composition is 70 mass% or greater
   (preferably 80 mass% or greater, more preferably 90 mass% or greater, still more preferably 95 mass% or greater, and particularly preferably 99 mass% or greater).
[Appendix 27] The nanocarbon material dispersion composition according to any one of Appendices 1 to 26, in which the nanocarbon material dispersion composition has a haze value of 5 or less (preferably 3 or less, and more preferably 1 or less).
[Appendix 28] A nanocarbon material including a nanodiamond particle and a graphene layer formed on a surface of the nanodiamond particle, in which
   a surface of the nanocarbon material is modified by a group represented by Formula (I) below:

      -X-R (I)
   where in Formula (I), X represents an amino group, an ether bond, an ester bond, a phosphinic acid group, a phosphonic acid group, a phosphoric acid ester, a sulfide bond, a carbonyl group, an amide group, an imide bond, a thiocarbonyl group, a siloxane bond, a sulfuric acid ester group, a sulfonyl group, a sulfone group, a sulfoxide, or a group in which two or more of those listed above are bonded, and a bond extending left from X binds to the nanocarbon material, R represents a monovalent organic group, and an atom that binds to X is a carbon atom.
[Appendix 29] A nanocarbon material including a nanodiamond particle and a graphene layer formed on a surface of the nanodiamond particle, in which a group containing a polyglycerin chain modifies a surface of the nanocarbon material.
[Appendix 30] The nanocarbon material according to Appendix 29, in which the group containing a polyglycerin chain is a group having a polyglyceryl group and/or a group in which a hydrogen atom of a hydroxy group in at least a part of the polyglyceryl group is substituted with a monovalent organic group.
[Appendix 31] The nanocarbon material according to Appendix 29 or 30, in which the group containing a polyglycerin chain is a polyglycerin chain-containing surface-modifying group represented by Formula (2) below:

   -(X²C₃H₅)-(OC₃H₅)p-(X³R²)q (2)

   where in Formula (2), p represents an integer of 1 or greater, and q represents an integer satisfying q = p + 2; X² represents a divalent group, and a bond extending left from X² in [X²C₃H₅] binds to the nanocarbon material; [X³R²] represents a terminal of the polyglycerin chain, X³ represents a single bond or a divalent group, and R² represents a hydrogen atom or a monovalent organic group.
[Appendix 32] The nanocarbon material according to Appendix 31, in which the divalent group is -NR^{a}-, -O-, -C(=O)O-, -PH(=O)O-, or -S- [preferably -NR^{a}-, -O-, or -C(=O)O-)], with R^{a} representing a hydrogen atom or a monovalent organic group.
[Appendix 33] The nanocarbon material according to Appendix 31 or 32, in which p in Formula (2) above is from 3 to 20 (preferably from 5 to 15).
[Appendix 34] A nanocarbon material including a nanodiamond particle and a graphene layer formed on a surface of the nanodiamond particle, in which
   a surface of the nanocarbon material is modified by a group represented by Formula (1) below:

      -X¹-R¹ (1)
   where in Formula (1), X¹ represents -Si-, -NH-, -O-, -O-C(=O)-, -C(=O)-O-, - NH-C(=O)-, -C(=O)-NH-, or -S-, and a bond extending left from X¹ binds to the nanocarbon material, R¹ represents a substituted or unsubstituted monovalent hydrocarbon group, and an atom that binds to X¹ is a carbon atom.
[Appendix 35] The nanocarbon material according to Appendix 34, in which the number of carbon atoms in R¹ is from 4 to 25 (preferably from 6 to 22, more preferably from 8 to 20).
[Appendix 36] The nanocarbon material according to Appendix 34 or 35, in which R¹ includes a hydrocarbon group having 4 or more consecutive carbon atoms in a linear chain.
[Appendix 37] The nanocarbon material according to any one of Appendices 34 to 36, in which in Formula (1) above, a molar ratio of carbon atoms to a total amount of heteroatoms selected from the group consisting of nitrogen atoms, oxygen atoms, sulfur atoms, and silicon atoms is 4.5 or greater (preferably 5 or greater, and more preferably 5.5 or greater).
[Appendix 38] A method of producing a nanocarbon material, including heating a nanodiamond material at 1400°C or below to heat the diamond on the nanodiamond particle surface to form a graphene layer.
[Appendix 39] The method of producing a nanocarbon material according to Appendix 38, in which the nanocarbon material is the nanocarbon material according to any one of Appendices 28 to 37.
[Appendix 40] The method of producing a nanocarbon material according to Appendix 38 or 39, in which a temperature in the heating is from 800 to 1400°C (preferably from 800 to 1000°C).
[Appendix 41] The method of producing a nanocarbon material according to any one of Appendices 38 to 40, further including subjecting the nanocarbon material obtained through the heating to oxidation with oxygen.
[Appendix 42] The method of producing a nanocarbon material according to any one of Appendices 38 to 41, further including surface-modifying by introducing a surface-modifying group into the nanocarbon material obtained through the heating.
[Appendix 43] A member including a base material and a coating film that is formed of a nanocarbon material, the coating film being provided on a surface of the base material, in which: the coating film has a wavenumber, which corresponds to a peak-top value in a wavenumber range of 1580 ± 50 cm⁻¹ in a Raman spectrum, from 1585 cm⁻¹ to 1630 cm⁻¹; and the coating film has a peak that appears at 2θ = 43 to 44° in an XRD analysis.
[Appendix 44] The member according to Appendix 43, in which the nanocarbon material includes the nanocarbon material according to any one of Appendices 28 to 37.

### Industrial Applicability

In the nanocarbon material dispersion composition according to an embodiment of the present disclosure, the nanocarbon material having a graphene structure is dispersed at nano-scale in the dispersion medium. Furthermore, the nanocarbon material according to an embodiment of the present disclosure has a graphene structure and has excellent dispersibility in the dispersion medium. As such, the present disclosure has industrial applicability.

## Claims

1. A nanocarbon material dispersion composition comprising a dispersion medium and a nanocarbon material dispersed at nano-scale in the dispersion medium, the nanocarbon material comprising a nanodiamond particle and a graphene layer formed on a surface of the nanodiamond particle, wherein the nanocarbon material has a wavenumber, which corresponds to a peak-top value in a wavenumber range of 1580 ± 50 cm⁻¹ in a Raman spectrum, from 1585 cm⁻¹ to 1630 cm⁻¹; and the nanocarbon material has a peak that appears at 2θ = 43 to 44° in an XRD analysis.

2. The nanocarbon material dispersion composition according to claim 1, wherein the nanocarbon material has an average dispersed particle size (D50) of 100 nm or less that is obtained by a dynamic light scattering method.

3. The nanocarbon material dispersion composition according to claim 1 or 2, wherein the nanocarbon material comprises a surface-modified nanocarbon material in which a surface of the nanocarbon material is modified by a group represented by Formula (I) below:
-X-R (I)
where in Formula (I), X represents an amino group, an ether bond, an ester bond, a phosphinic acid group, a phosphonic acid group, a phosphoric acid ester, a sulfide bond, a carbonyl group, an amide group, an imide bond, a thiocarbonyl group, a siloxane bond, a sulfuric acid ester group, a sulfonyl group, a sulfone group, a sulfoxide, or a group in which two or more of those listed above are bonded, and a bond extending left from X binds to the nanocarbon material, R represents a monovalent organic group, and an atom that binds to X is a carbon atom.

4. The nanocarbon material dispersion composition according to claim 1 or 2, wherein the nanocarbon material comprises a nanocarbon material that is surface-modified by a group containing a polyglycerin chain.

5. The nanocarbon material dispersion composition according to claim 1 or 2, wherein the nanocarbon material comprises a surface-modified nanocarbon material in which a surface of the nanocarbon material is modified by a group represented by Formula (1) below:
-X¹-R¹ (1)
where in Formula (1), X¹ represents -Si-, -NH-, -O-, -O-C(=O)-, -C(=O)-O-, - NH-C(=O)-, -C(=O)-NH-, or -S-, and a bond extending left from X¹ binds to the nanocarbon material, R¹ represents a substituted or unsubstituted monovalent hydrocarbon group, and an atom that binds to X¹ is a carbon atom.

6. The nanocarbon material dispersion composition according to any one of claims 1 to 5, wherein the dispersion medium comprises water, an aliphatic hydrocarbon, an aromatic hydrocarbon, an alicyclic hydrocarbon, an alcohol, an ether, an ester, an ionic liquid, or a lubricant base.

7. A nanocarbon material comprising a nanodiamond particle and a graphene layer formed on a surface of the nanodiamond particle, wherein
a surface of the nanocarbon material is modified by a group represented by Formula (I) below:
-X-R (I)
where in Formula (I), X represents an amino group, an ether bond, an ester bond, a phosphinic acid group, a phosphonic acid group, a phosphoric acid ester, a sulfide bond, a carbonyl group, an amide group, an imide bond, a thiocarbonyl group, a siloxane bond, a sulfuric acid ester group, a sulfonyl group, a sulfone group, a sulfoxide, or a group in which two or more of those listed above are bonded, and a bond extending left from X binds to the nanocarbon material, R represents a monovalent organic group, and an atom that binds to X is a carbon atom.

8. A member comprising a base material and a coating film comprising a nanocarbon material, the coating film being provided on a surface of the base material, wherein
the coating film has a wavenumber, which corresponds to a peak-top value in a wavenumber range of 1580 ± 50 cm⁻¹ in a Raman spectrum, from 1585 cm⁻¹ to 1630 cm⁻¹; and the coating film has a peak that appears at 2θ = 43 to 44° in an XRD analysis.
